# EUROPEAN PATENT APPLICATION

(11) **EP 4 489 420 A1**
(43) Date of publication of application: **08.01.2025**
(21) Application number: 23759490.8
(22) Date of filing: 06.01.2023
(51) Int. Cl.: H04N 23/60, G02B 7/28, G03B 7/00, G03B 15/00, G06T 7/00

(54) **INFORMATION PROCESSING DEVICE AND PROGRAM**

(30) Priority: 28.02.2022 JP 2022029411
(71) Applicant: Sony Semiconductor Solutions Corporation, Atsugi-shi, Kanagawa 243-0014 (JP); Sony Group Corporation, Tokyo 108-0075 (JP)
(72) Inventor: MATSUI, Yuji, Atsugi-shi, Kanagawa 243-0014 (JP); NISHIDA, Sho, Tokyo 108-0075 (JP)
(74) Representative: MFG Patentanwälte Meyer-Wildhagen Meggle-Freund Gerhard PartG mbB
(86) International application number: PCT/JP2023/000177
(87) International publication number: WO 2023/162484

(57) **Abstract**

[Object]

Provided is a novel and improved technology capable of distinguishing the treatment of a predetermined object recognized from image data depending on the situation.

[Solving Means]

Provided is an information processing apparatus including an image recognition unit configured to recognize an object from image data, a motion detection unit configured to detect motion in sensing data acquired by a sensor, and an object detection unit configured to detect an object recognized as a predetermined object by the image recognition unit and corresponding to a region in which motion has been detected by the motion detection unit.

## Description

### [Technical Field]

The present invention relates to an information processing apparatus and a program.

### [Background Art]

In recent years, in civil engineering construction sites or the like, a human detection technology using image recognition has been utilized for a purpose of monitoring work or preventing the occurrence of accidents caused by contact between people and construction machines or the like. For example, PTL 1 discloses a monitoring system configured to perform image recognition to recognize a person image or a helmet image in a still image, thereby avoiding contact between people and construction machines. According to the above-mentioned technology, in a case where a person image or a helmet image is recognized in a still image, on the basis of the approach distance between the person image or the helmet image and an imaging apparatus mounted on a construction machine, a warning output or operation stop processing of the construction machine is performed.

### [Citation List]

### [Patent Literature]

[PTL 1]
Japanese Patent Laid-open No. 2019-157497

### [Summary]

### [Technical Problem]

However, in the above-mentioned technology, it is not distinguished whether a predetermined object such as the helmet is placed on the ground or the like or the helmet is being worn by a person. Thus, in a case where a helmet placed on the ground or the like is recognized in a still image, even when no one is actually approaching a construction machine, a warning is output or the operation of the construction machine is stopped, which has been a problem.

Thus, the present invention has been made in view of the above-mentioned problem, and it is an object of the present invention to provide a novel and improved technology capable of distinguishing a treatment of a predetermined object recognized from image data depending on the situation.

### [Solution to Problem]

To solve the above-mentioned problem, according to a certain aspect of the present invention, there is provided an information processing apparatus including an image recognition unit configured to recognize an object from image data, a motion detection unit configured to detect motion in sensing data acquired by a sensor, and an object detection unit configured to detect an object recognized as a predetermined object by the image recognition unit and corresponding to a region in which motion has been detected by the motion detection unit.

Further, according to the present disclosure, there is provided an information processing apparatus including an image recognition unit configured to recognize an object from image data, and an object detection unit configured to detect a plurality of objects recognized as predetermined objects of types different from each other by the image recognition unit.

Further, according to the present disclosure, there is provided a program for causing a computer to function as an image recognition unit configured to recognize an object from image data, a motion detection unit configured to detect motion in sensing data acquired by a sensor, and an object detection unit configured to detect an object recognized as a predetermined object by the image recognition unit and corresponding to a region in which motion has been detected by the motion detection unit.

### [Brief Description of Drawings]

[FIG. 1]

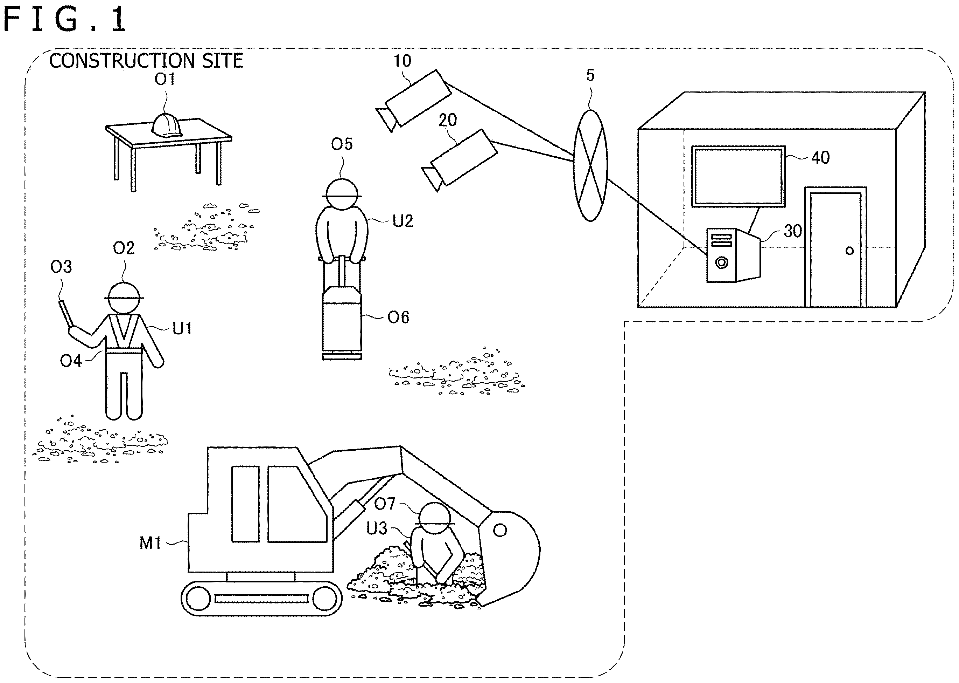

   FIG. 1 is an explanatory diagram illustrating the overview of an information processing system according to the present embodiment.
[FIG. 2]

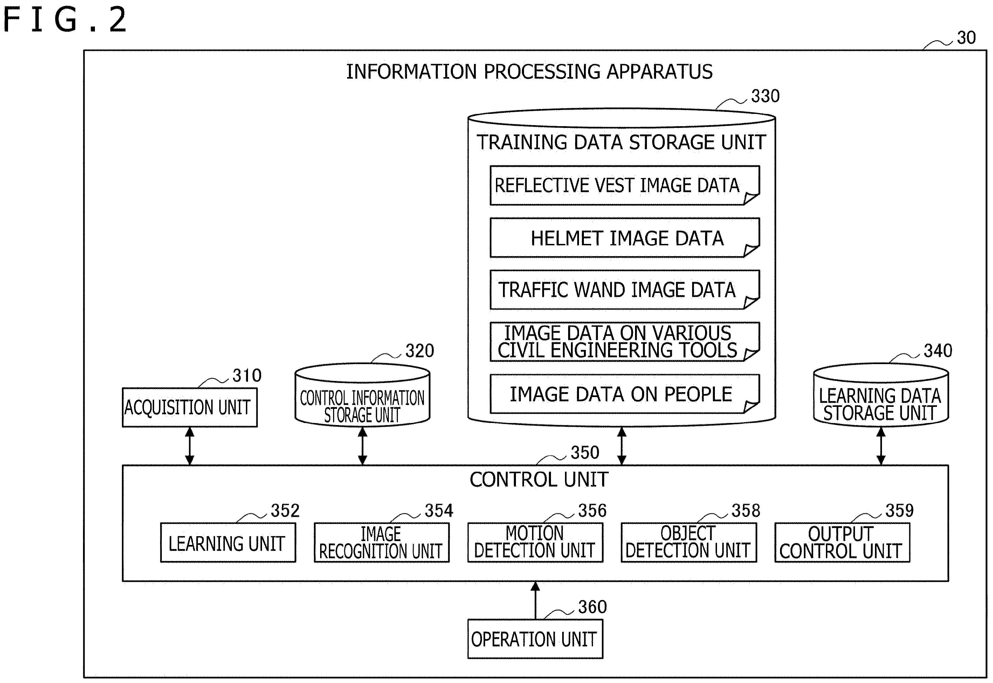

   FIG. 2 is a block diagram illustrating a functional configuration example of an information processing apparatus 30 according to the present embodiment.
[FIG. 3]

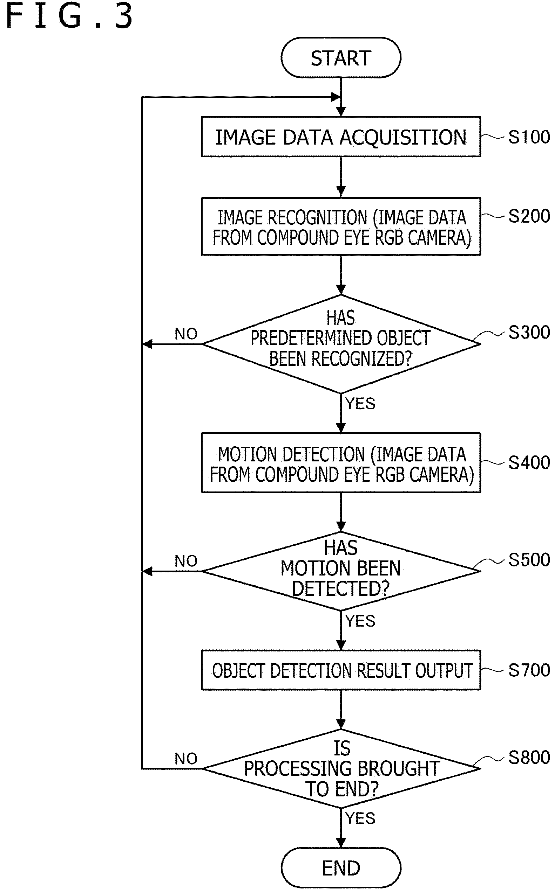

   FIG. 3 is a flowchart diagram illustrating a first operation example of the information processing system according to the present embodiment.
[FIG. 4]

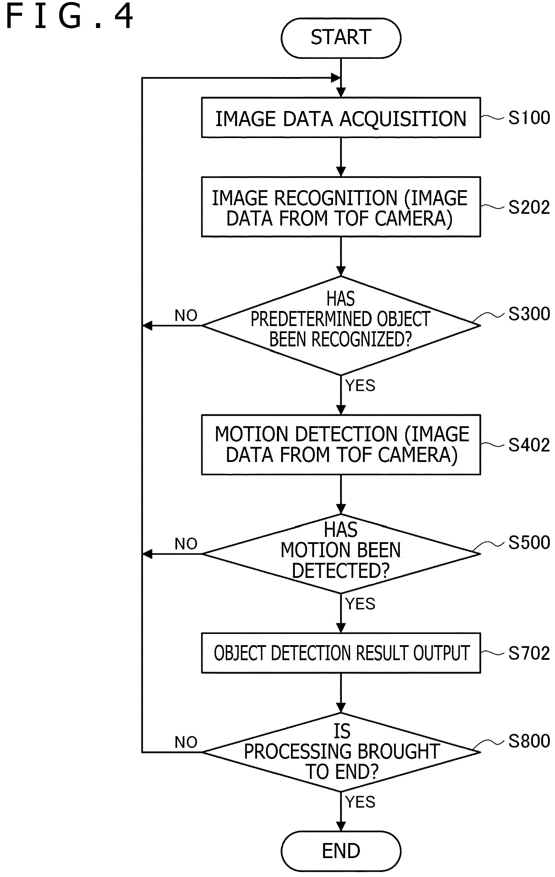

   FIG. 4 is a flowchart diagram illustrating a second operation example of the information processing system according to the present embodiment.
[FIG. 5]

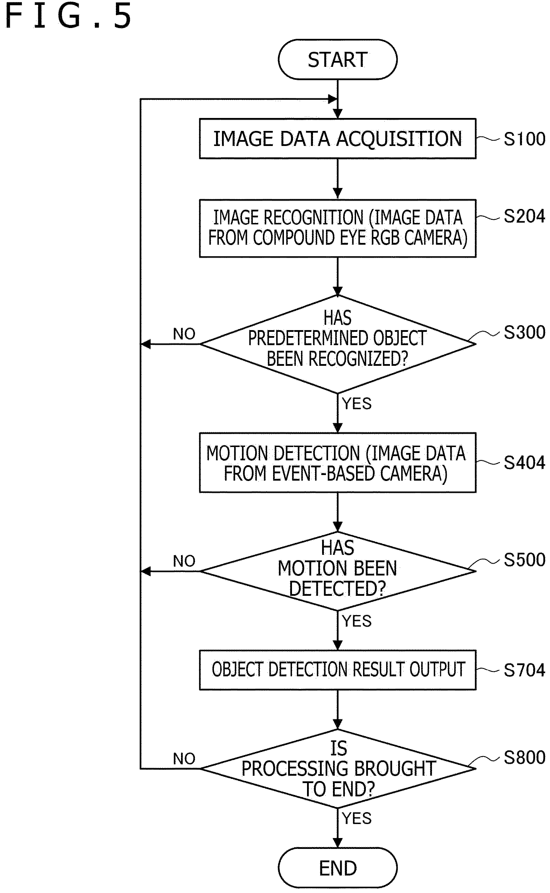

   FIG. 5 is a flowchart diagram illustrating a third operation example of the information processing system according to the present embodiment.
[FIG. 6]

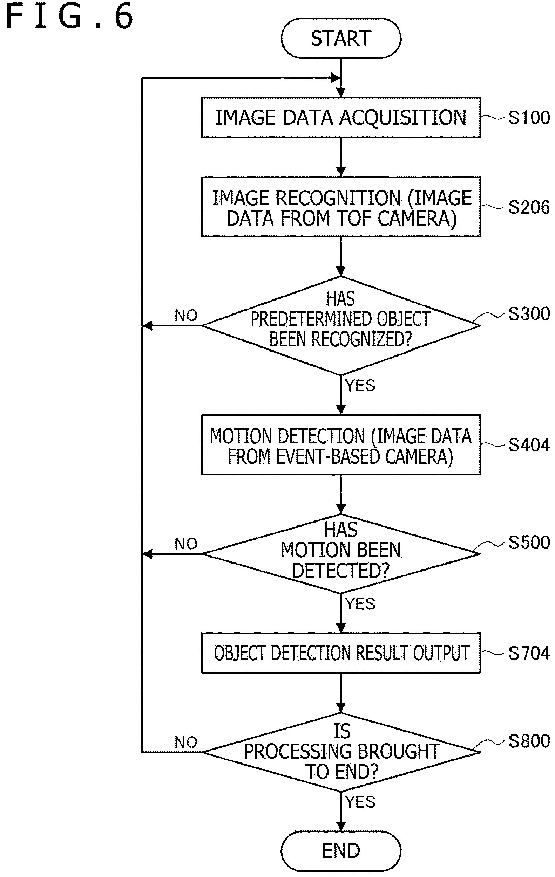

   FIG. 6 is a flowchart diagram illustrating a fourth operation example of the information processing system according to the present embodiment.
[FIG. 7]

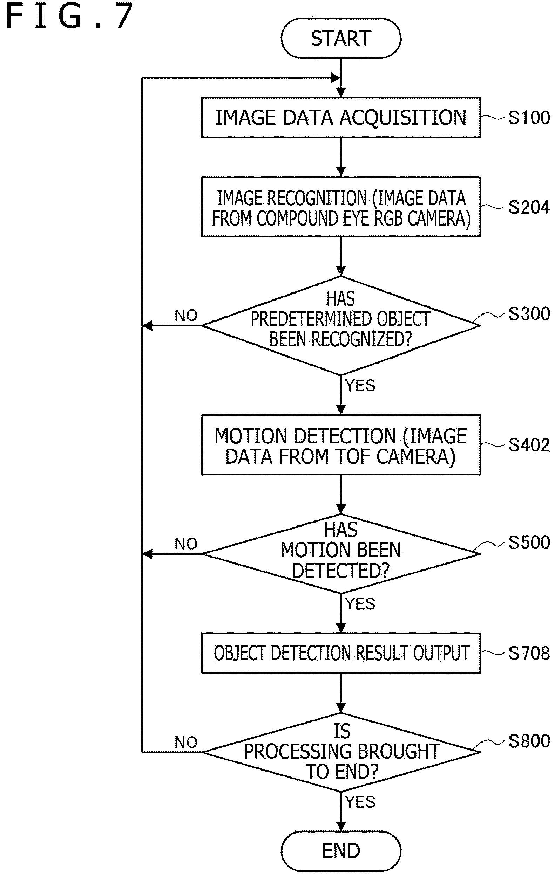

   FIG. 7 is a flowchart diagram illustrating a fifth operation example of the information processing system according to the present embodiment.
[FIG. 8]

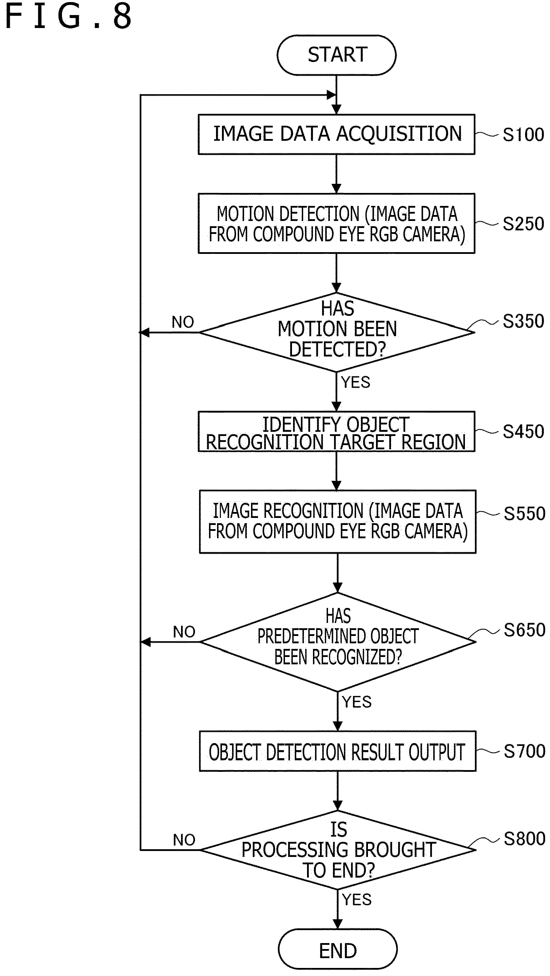

   FIG. 8 is a flowchart diagram illustrating a sixth operation example of the information processing system according to the present embodiment.
[FIG. 9]

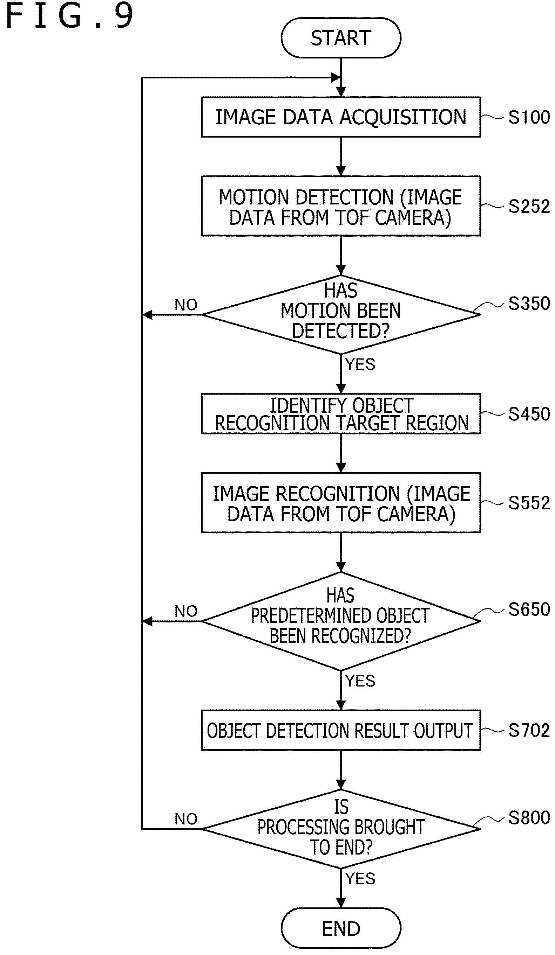

   FIG. 9 is a flowchart diagram illustrating a seventh operation example of the information processing system according to the present embodiment.
[FIG. 10]

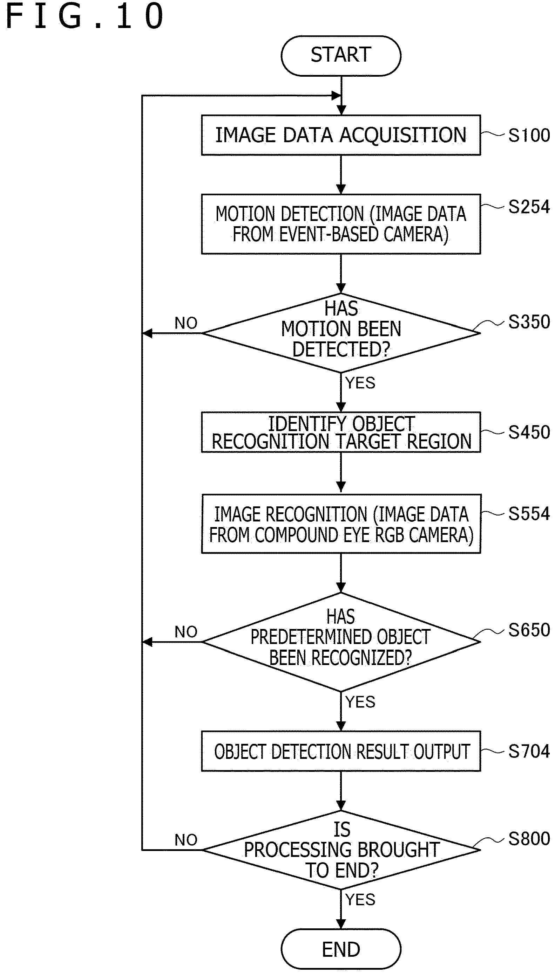

   FIG. 10 is a flowchart diagram illustrating an eighth operation example of the information processing system according to the present embodiment.
[FIG. 11]

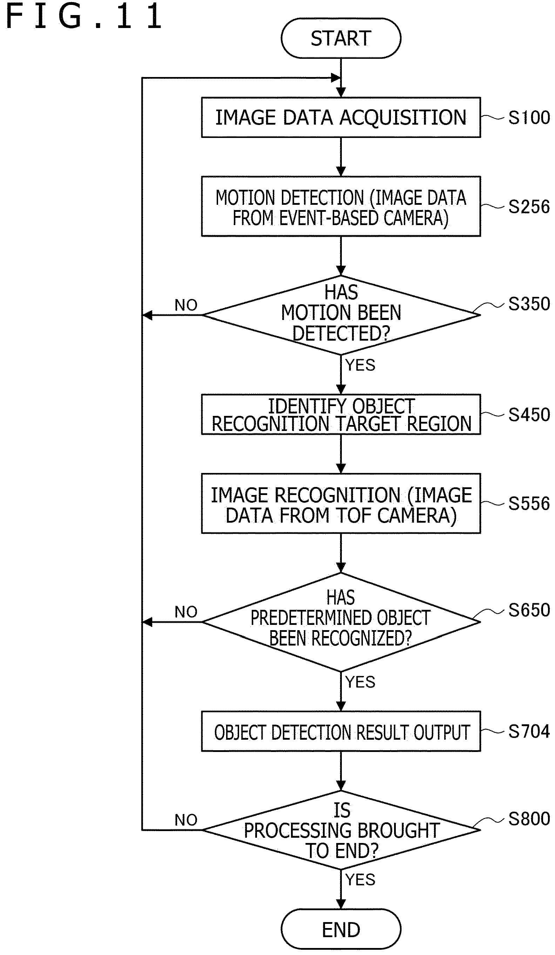

   FIG. 11 is a flowchart diagram illustrating a ninth operation example of the information processing system according to the present embodiment.
[FIG. 12]

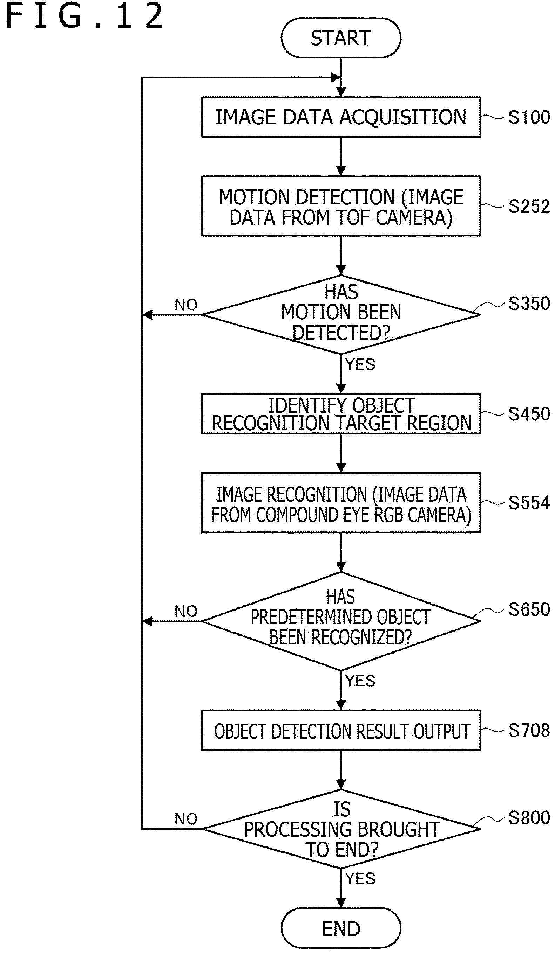

   FIG. 12 is a flowchart diagram illustrating a tenth operation example of the information processing system according to the present embodiment.
[FIG. 13]

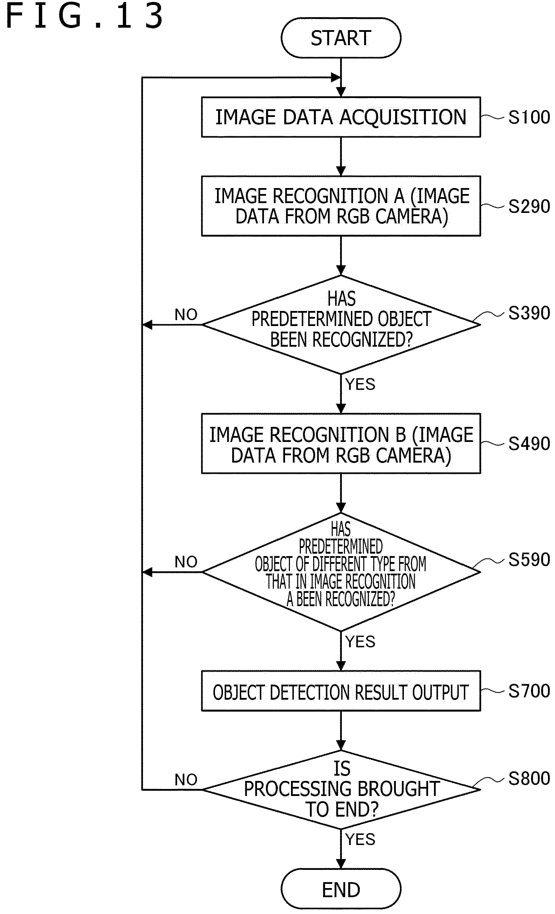

   FIG. 13 is a flowchart diagram illustrating an eleventh operation example of the information processing system according to the present embodiment.
[FIG. 14]

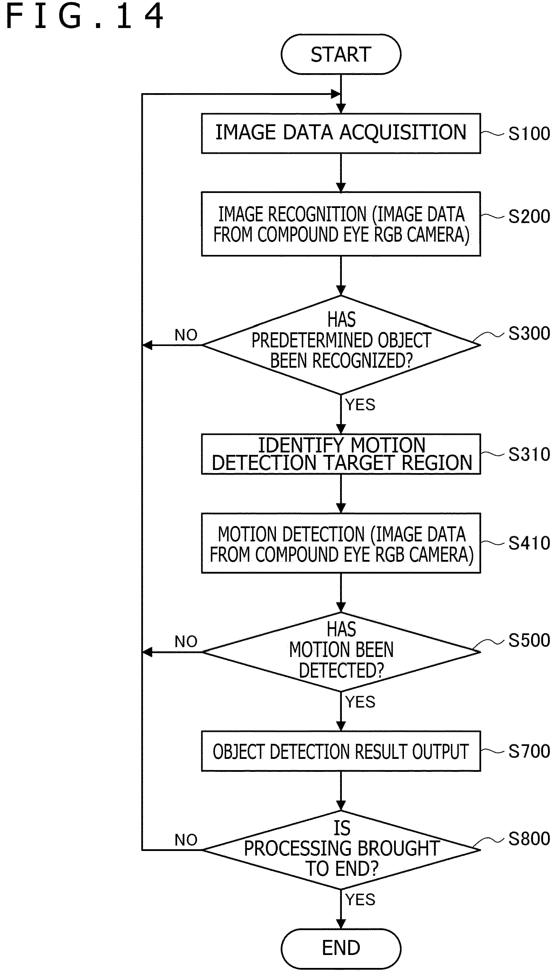

   FIG. 14 is a flowchart diagram illustrating a first modified example of the operation of the information processing system according to the present embodiment.
[FIG. 15]

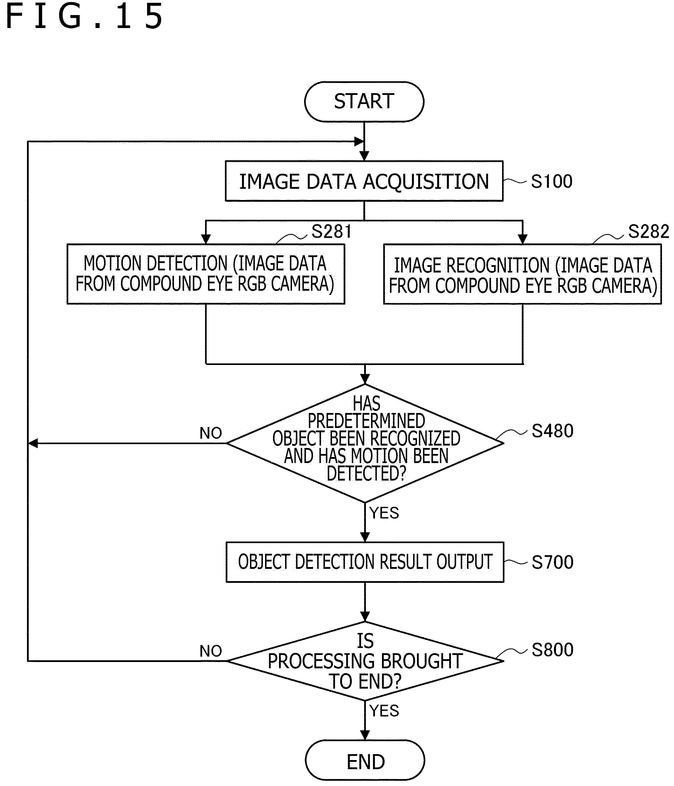

   FIG. 15 is a flowchart diagram illustrating a second modified example of the operation of the information processing system according to the present embodiment.
[FIG. 16]

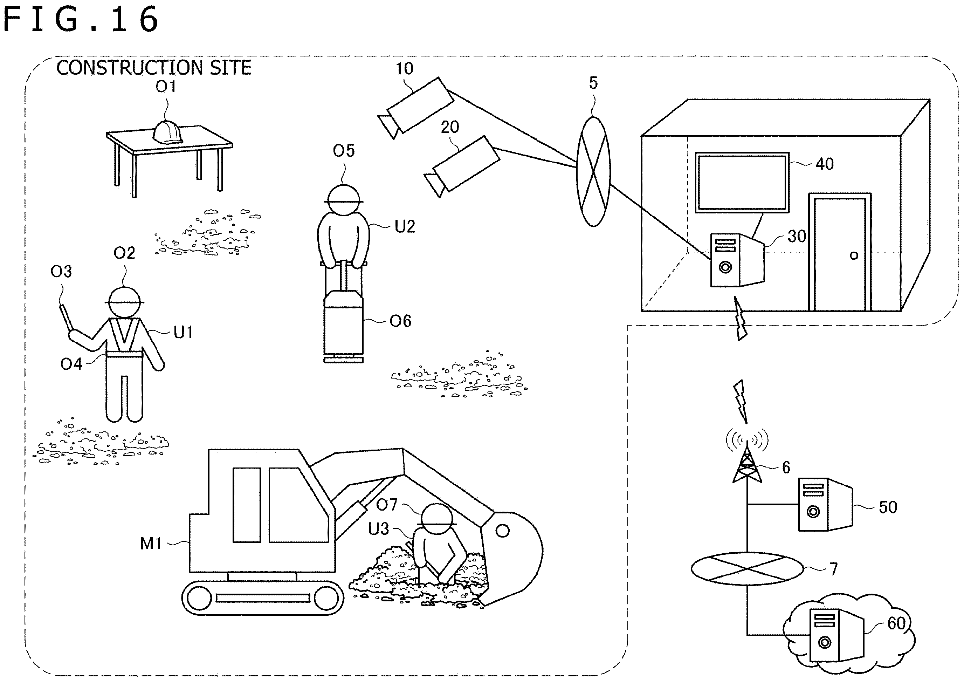

   FIG. 16 is an explanatory diagram illustrating a modified example of the configuration of the information processing system according to the present embodiment.
[FIG. 17]

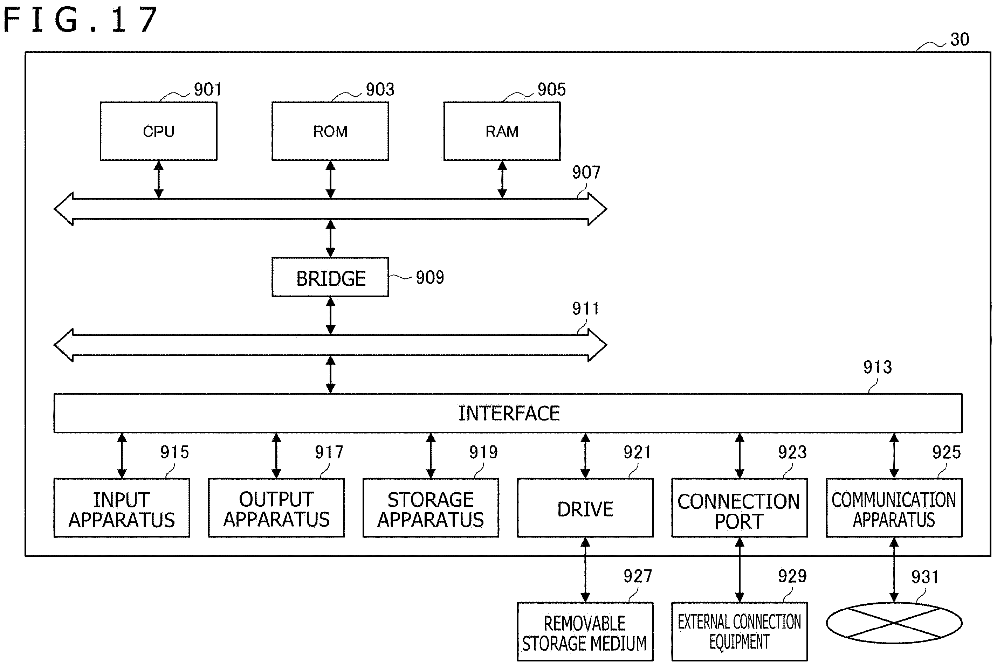

   FIG. 17 is a block diagram illustrating a hardware configuration example of the information processing apparatus 30 according to the present disclosure.

### [Description of Embodiment]

Now, with reference to the attached drawings, a preferred embodiment of the present disclosure is described in detail. Note that, in the present specification and drawings, components having substantially the same functional configuration are denoted by the same reference symbols to omit duplicate descriptions.

Further, in the present specification and drawings, there are cases where a plurality of components having substantially the same functional configuration is distinguished by the same reference symbol suffixed with different numerals. However, in a case where there is no particular need to distinguish each of the plurality of components having substantially the same functional configuration, each of the plurality of components is denoted by only the same reference symbol.

Note that, the descriptions are given in the order of items described below:
1. Overview of Information Processing System According to Embodiment of Present Disclosure
2. Functional Configuration Example
   2-1. Camera 10 and Camera 20
   2-2. Information Processing Apparatus 30
3. Operation
4. Modified Example
5. Hardware Configuration Example
6. Conclusion

### <1. Overview of Information Processing System According to Embodiment of Present Disclosure>

An embodiment of the present disclosure relates to an information processing apparatus capable of distinguishing, when performing image recognition from sensing data acquired by a sensor, the treatment of a predetermined object recognized from the image depending on the situation. The present embodiment is applied, for example, to a case where workers or the like are recognized from images captured by cameras installed at construction sites for civil engineering construction work, and work monitoring, equipment control for safety assurance, or safety confirmation of the flow lines of construction machines or people is performed on the basis of recognition results.

FIG. 1 is an explanatory diagram illustrating the overview of an information processing system according to the present embodiment. As illustrated in FIG. 1, the information processing system according to the present embodiment includes a camera 10, a camera 20, an information processing apparatus 30, and an output apparatus 40. The camera 10, the camera 20, and the information processing apparatus 30 are configured to be communicable via a local network 5. Further, the information processing apparatus 30 is connected to the output apparatus 40 by a cable.

The camera 10 and the camera 20 are sensors configured to capture a worker U working at a construction site or an object O. Examples of the object O includes various types of equipment and tools used in civil engineering construction sites. Note that, in the example illustrated in FIG. 1, two sensors, namely, the camera 10 and the camera 20, are installed at a construction site. However, the information processing system according to the present embodiment may only include one sensor, namely, the camera 10. In the present embodiment, examples of a case where only the camera 10 is installed at the construction site and a case where both the camera 10 and the camera 20 are installed are each described.

The information processing apparatus 30 has functions of performing image recognition by acquiring image data on the worker U or the object O captured by the camera 10 or the camera 20 and recognizing the worker U or the object O from the image data, from the camera 10 or the camera 20. Further, the information processing apparatus 30 detects the motion of the worker U or the object O from the image data on the worker U or the object O captured by the camera 10 or the camera 20. The information processing apparatus 30 outputs the results of the image recognition and motion detection described above to the output apparatus 40. Note that, the image data obtained by the camera 10 and the camera 20 is an example of sensing data.

In the example illustrated in FIG. 1, it is understood that the information processing apparatus 30 is installed in an office or the like at the construction site and configured to be communicable with the camera 10 and the camera 20 via the local network 5.

The object O is an object to be held or worn by people such as workers at construction sites. The object O includes, for example, worker equipment such as helmets. Further, the object O may include various civil engineering tools such as hammers or rolling machines. Moreover, the object O may include traffic wands including light-emitting portions such as LEDs (Light Emitting Diodes), or equipment including reflective materials with a property of reflecting light, such as reflective vests that recursively reflect light. FIG. 1 illustrates the seven objects O, more specifically, an object 01 (helmet), an object O2 (helmet), an object O3 (LED traffic wand), an object O4 (reflective vest), an object O5 (helmet), an object O6 (rolling machine), and an object O7 (helmet).

The worker U is a person who works at a construction site. In the example illustrated in FIG. 1, it is understood that there are three workers, namely, a worker U1 to a worker U3. Further, in the example illustrated in FIG. 1, it is understood that the worker U1 is wearing the object O2 (helmet) and the object O4 (reflective vest) and holding the object O3 (LED traffic wand) in one hand. Further, it is understood that the worker U2 is wearing the object O5 (helmet) and operating the object O6 (rolling machine). Moreover, it is understood that the worker U3 is wearing the object O7 (helmet) and digging a hole behind a construction machine M1. Further, since the worker U3 is working inside the hole, depending on the installation position and angle of view of the camera 10 or the camera 20, only a part of the worker U3's body may be captured on images obtained by the camera 10 and the camera 20.

The information processing apparatus 30 learns image data on the object O and image data on the worker U as described above, using machine learning. The information processing apparatus 30 can recognize the object O or the worker U from image data acquired from the camera 10 or the camera 20, using models created as a result of the above-mentioned learning.

The output apparatus 40 is an output apparatus configured to display a huge variety of screens under the control of the information processing apparatus 30. For example, the output apparatus 40 outputs, under the control of the information processing apparatus 30, the results of image recognition and motion detection by the information processing apparatus 30 as detection information. Further, the output apparatus 40 is an example of an output unit. In the present embodiment, examples in which the output apparatus 40 and the information processing apparatus 30 are implemented as separate apparatuses are described. However, the output apparatus 40 may be implemented on the same apparatus as the information processing apparatus 30.

### (Organization of Problems)

Here, to accurately recognize people such as workers from images obtained by sensors such as cameras at construction sites for civil engineering construction work, it is desirable to consider various situations specific to construction sites.

For example, at construction sites, there are cases where parts of workers' bodies are hidden on image data obtained by sensors due to obstacles such as construction machines, fences, signboards, or flags, construction targets such as trenches, and embankments. In this case, the workers have failed to be recognized from the images in image recognition processing in some cases. In particular, in a case where the installation positions of sensors are high, there have been cases where, when a worker has approached a construction machine or the like to be hidden behind it, only a helmet worn by the worker has been able to be viewed on images obtained by the sensors, and the worker has failed to be recognized from the images as in the cases described above.

In response to the problems as described above, for example, the technology disclosed in PTL 1 has been considered. According to the above-mentioned technology, there is provided a monitoring system configured to perform, in a case where a person image or a helmet image is recognized in a still image through image recognition, on the basis of the approach distance between the person image or the helmet image and an imaging apparatus mounted on a construction machine, a warning output or operation stop processing of the construction machine.

That is, even at construction sites for civil engineering construction work or the like where entire or parts of workers' bodies are hidden on images obtained by sensors in some cases, equipment worn by a worker, such as a helmet, or a tool used in civil engineering construction work, such as a traffic wand, is recognized through image recognition, thereby allowing the person wearing or holding the equipment or tool to be indirectly detected.

However, in the above-mentioned technology, it is not distinguished whether a predetermined object such as the helmet is placed on the ground or the like or the helmet is being worn by a person. Thus, in a case where a helmet placed on the ground or the like is recognized in a still image, even when no one is actually approaching a construction machine, a warning is output or the operation of the construction machine is stopped, which has been a problem.

Moreover, at construction sites, workers may hold or wear equipment including reflective materials, such as reflective vests, intended for nighttime work, or equipment including components with a property of emitting or reflecting light, such as traffic wands including light-emitting portions such as LEDs. In this case, in the related art, due to the influence of light from the reflective materials or light-emitting portions described above, a large deviation occurs between the features of learning results learned in advance and the features of image data obtained by sensors, leading to a decrease in the recognition rate of workers, which has also been a problem.

Thus, by focusing on the above-mentioned circumstances, the present inventor has arrived at devising the embodiment of the present disclosure. According to the embodiment of the present invention, it is possible to distinguish the treatment of a predetermined object recognized from an image depending on the situation. More specifically, the information processing apparatus 30 according to the embodiment of the present invention recognizes, through image recognition, worker equipment such as helmets or various civil engineering construction tools from image data obtained by the camera 10 or the camera 20. The worker equipment such as helmets or the civil engineering construction tools such as traffic wands are examples of the predetermined object. Moreover, the information processing apparatus 30 according to the present embodiment treats the predetermined object by distinguishing whether to regard the above-mentioned predetermined object as a detection target or not depending on whether the motion of the above-mentioned recognized predetermined object has detected or not. Further, the information processing apparatus 30 according to the present embodiment also distinguishes the treatment of the above-mentioned predetermined object also depending on whether the position of the above-mentioned recognized predetermined object satisfies predetermined conditions or not. Now, the functional configuration example and operation of the information processing apparatus 30 according to the embodiment of the present invention as described above are sequentially described in detail.

### <2. Functional Configuration Example>

### <2-1. Camera 10 and Camera 20>

The camera 10 and the camera 20 are cameras configured to capture the worker U or the object O. In the present embodiment, the camera 10 and the camera 20 are installed at positions at which the camera 10 and the camera 20 can capture the worker U or the object O at the construction site for civil engineering construction work. The camera 10 and the camera 20 supply image data obtained by capturing the worker U or the object O to the information processing apparatus 30.

The camera 10 and the camera 20 may each be installed and fixed at a single location or mounted on a moving object such as an excavator.

Further, the camera 10 and the camera 20 may have functions of receiving radio waves from artificial satellites and measuring their positions using GNSS (Global Navigation Satellite System) configured to detect the current positions of the camera 10 and the camera 20 themselves. In this case, the camera 10 transmits information regarding its position to the information processing apparatus 30, together with image data on the worker U or the object O.

Further, the information processing system according to the present embodiment may include only one sensor, namely, the camera 10, or may include two sensors, namely, the camera 10 and the camera 20. Further, the camera 10 and the camera 20 may be sensors of the same type or sensors of types different from each other. Such configurations may be selected depending on the types of sensors to be employed for the camera 10 and the camera 20.

The camera 10 and the camera 20 as described above may be, for example, binocular RGB cameras that utilize visible light and can acquire image data including color information. In a case where the camera 10 and the camera 20 are binocular RGB cameras, the camera 10 and the camera 20 supply two types of image data obtained by the left and right image sensors to the information processing apparatus 30. Further, the camera 10 and the camera 20 supply the distances to a subject and depth information within the captured screens to the information processing apparatus 30. The information processing apparatus 30 can perform image recognition of the worker U or the object O using the two types of image data. Moreover, the information processing apparatus 30 can detect, on the basis of the above-mentioned distance and depth information supplied from the camera 10, three-dimensional position information regarding the worker U or the object O recognized through image recognition.

Alternatively, the camera 10 and the camera 20 may be TOF (Time Of Flight) cameras utilizing near-infrared light. In this case, the camera 10 and the camera 20 include a projector configured to emit near-infrared light and a receiver configured to receive near-infrared light. The camera 10 and the camera 20 as described above can measure the time taken for the irradiation light from the projector to be reflected by a subject and detected by the receiver, and can calculate, on the basis of the time, the distance from the camera 10 or the camera 20 itself to the subject. Further, in this case, the camera 10 and the camera 20 supply the calculated distance information or data on a Depth image corresponding to an image representing the distance information to the information processing apparatus 30, together with image data on an infrared image obtained by capturing the worker U or the object O. The information processing apparatus 30 recognizes the worker U or the object O from the infrared image acquired from the camera 10 or the camera 20. Moreover, the information processing apparatus 30 can detect, on the basis of the distance information or Depth image described above, three-dimensional position information regarding the worker U or the object O.

Moreover, the camera 10 and the camera 20 may be cameras of event-based type configured to detect luminance changes in each pixel. Such cameras of event-based type are sometimes referred to as "neuromorphic camera," "neuromorphic sensor," or the like. With cameras of event-based type, only pixels corresponding to parts of a subject in which luminance changes have occurred are detected and output as image data. That is, with cameras of event-based type, an image is obtained in which only the contour of a moving subject is extracted, excluding the parts affected by changes in lighting conditions. Herein, such cameras of event-based type are referred to as "event-based camera."

In a case where the camera 10 and the camera 20 are implemented by event-based cameras, the camera 10 and the camera 20 detect only pixels corresponding to parts of a subject in which luminance changes have occurred and generate image data. For example, a case where the object O1 (helmet) and the worker U1 wearing the object O2 (helmet) illustrated in FIG. 1 have been captured by the camera 10 and the camera 20 is assumed. In this case, since the object O1 (helmet) is placed on a stand and is at rest, the object O1 (helmet) does not appear as an image on the image obtained by the camera 10. Meanwhile, since it is assumed that the worker U1 is always moving, on the above-mentioned image, the object O2 (helmet) moving with the movement of the worker U1 appears as an image. The information processing apparatus 30 can detect the motion of a subject from image data obtained by such event-based cameras.

The camera 10, the camera 20, and the information processing apparatus 30 included in the information processing system according to the present embodiment may adopt the following three types of configurations depending on the types of sensors to be employed. In the first configuration, the information processing apparatus 30 uses image data obtained by the camera 10 for the processing of image recognition and uses image data obtained by the camera 20 for the processing of motion detection. In the second configuration, the information processing apparatus 30 uses the same image data obtained by a single sensor, namely, the camera 10, for both image recognition processing and motion detection processing. In this case, the information processing system according to the present embodiment may include only one sensor, namely, the camera 10. In the third configuration, the information processing apparatus 30 performs the processing of image recognition of predetermined objects of types different from each other from respective pieces of image data obtained by the camera 10 and the camera 20. The operation of the information processing system according to the present embodiment for each configuration as described above, and effects obtained with the respective configurations are described in detail later.

### <2-2. Information Processing Apparatus 30>

FIG. 2 is a block diagram illustrating a functional configuration example of the information processing apparatus 30 according to the present embodiment. As illustrated in FIG. 2, the information processing apparatus 30 includes an acquisition unit 310, a control information storage unit 320, a training data storage unit 330, a learning data storage unit 340, a control unit 350, and an operation unit 360.

### (Acquisition Unit 310)

The acquisition unit 310 has functions of sending and receiving data to and from other apparatuses under the control of the control unit 350. For example, the acquisition unit 310 has a function of acquiring image data on the worker U or the object O from the camera 10 and the camera 20. The acquisition unit 310 supplies the above-mentioned image data acquired from the camera 10 and the camera 20 to the control unit 350.

### (Control Information Storage Unit 320)

The control information storage unit 320 is a storage apparatus capable of storing programs and data for causing the control unit 350 to operate. Further, the control information storage unit 320 can also temporarily store various types of data required during the operation of the control unit 350. For example, the storage apparatus may be a non-volatile storage apparatus.

### (Training Data Storage Unit 330)

The training data storage unit 330 is a storage apparatus configured to store training data to be used for machine learning by the control unit 350 described later. "Teacher data" refers to image data on an image of a predetermined object that the control unit 350 is intended to recognize in image recognition by the control unit 350. In the example illustrated in FIG. 2, the training data storage unit 330 stores image data on objects to be held or worn by people, such as image data on reflective vests, image data on helmets, image data on traffic wands, and image data on various civil engineering tools such as rolling machines. Further, the training data storage unit 330 can store image data corresponding to recognition targets in image recognition by an image recognition unit 354 described later, other than the examples illustrated in FIG. 2.

Moreover, the above-mentioned image data stored in the training data storage unit 330 includes image data on objects that workers may possibly hold or wear at construction sites for civil engineering construction work or the like, such as traffic wands including light-emitting portions such as LEDs or equipment including members with a property of emitting or reflecting light, such as reflective vests that recursively reflect light. With this configuration, a learning unit 352 can perform learning for image recognition taking into account the influence of light from the reflective materials or light-emitting portions described above in advance. Thus, the problem of the decrease in the recognition rate of workers due to a large deviation between the features of learning results learned in advance and the features of image data obtained by sensors can be reduced.

Note that, as the above-mentioned image data stored in the training data storage unit 330, image data depending on the types of image data obtained by the camera 10 and the camera 20 is stored. For example, in a case where the image data obtained by the camera 10 and the camera 20 includes color information and luminance information, the training data storage unit 330 may store training data on images including color information and luminance information. Alternatively, in a case where the image data obtained by the camera 10 or the camera 20 is image data on infrared images, the training data storage unit 330 stores training data on infrared images. Moreover, in a case where the image data obtained by the camera 10 or the camera 20 is image data obtained by an event-based camera, the training data storage unit 330 stores image data captured by the event-based camera as training data.

### (Learning Data Storage Unit 340)

The learning data storage unit 340 is a storage apparatus configured to store models created as a result of learning performed by the control unit 350 using machine learning as described later. The control unit 350 can perform image recognition using the models stored in the learning data storage unit 340 and recognize the worker U or the object O from image data acquired from the camera 10.

### (Control Unit 350)

The control unit 350 includes a CPU (Central Processing Unit) and the like and has functions that may be implemented by the CPU deploying programs stored in the control information storage unit 320 to a RAM (Random Access Memory) and executing the programs. At this time, a computer-readable recording medium having recorded thereon the programs may also be provided. Alternatively, the control unit 350 may be configured by dedicated hardware or a combination of a plurality of pieces of hardware. The control unit 350 as described above controls all the operations in the information processing apparatus 30. For example, the control unit 350 controls communication between the acquisition unit 310, and the camera 10 and the camera 20. Further, the control unit 350 has, as illustrated in FIG. 2, functions as the learning unit 352, the image recognition unit 354, a motion detection unit 356, an object detection unit 358, and an output control unit 359.

The learning unit 352 has a function of extracting features to be utilized in image recognition by the image recognition unit 354 from training data stored in the training data storage unit 330. For example, the learning unit 352 may extract, from image data on helmets stored in the training data storage unit 330, color information, gradients of color density, or HOG (Histograms of Oriented Gradients) features as features. Further, the learning unit 352 has a function of performing learning necessary for performing image recognition of the worker U or the object O on the basis of the above-mentioned features extracted from the above-mentioned training data.

The image recognition unit 354 performs image recognition of the worker U or the object O from image data on the worker U or the object O acquired from the camera 10 or the camera 20 using the models learned by the learning unit 352 in advance. Here, the method of learning by the learning unit 352 and the method of image recognition by the image recognition unit 354 are not particularly limited. For example, as machine learning algorithms to be used for learning by the learning unit 352 and image recognition by the image recognition unit 354, neural networks (for example, deep learning) may be employed, but the machine learning algorithms are not limited to neural networks. For example, the image recognition unit 354 may perform image recognition using two-dimensional object recognition or bone estimation algorithms. Further, the image recognition unit 354 may perform recognition processing in parallel using a plurality of recognition algorithms, such as algorithms for recognizing humans and algorithms for recognizing objects other than humans.

Moreover, the image recognition unit 354 may recognize two or more predetermined objects of types different from each other from image data acquired from the camera 10. Alternatively, the image recognition unit 354 may recognize two or more predetermined objects of types different from each other from respective two pieces of image data acquired from the camera 10 and the camera 20. For example, the image recognition unit 354 may recognize the object O2 (helmet) from image data acquired from the camera 10 and recognize the object O4 (reflective vest) from image data acquired from the camera 20. The image recognition unit 354 supplies the results of such image recognition to the object detection unit 358.

The motion detection unit 356 has a function of detecting motion from image data obtained by the camera 10 or the camera 20. For example, the motion detection unit 356 may detect regions with motion from the entire image data or the presence or absence of motion in certain regions of the image data. In a case where the information processing system according to the present embodiment includes only one sensor, namely, the camera 10, the motion detection unit 356 detects motion from image data acquired from the camera 10. Alternatively, in a case where the information processing system according to the present embodiment includes two sensors, namely, the camera 10 and the camera 20, the motion detection unit 356 detects motion from image data acquired from the camera 20.

The motion detection unit 356 may compare, for example, the pixel values (for example, luminance) of the images of temporally adjacent frames of the above-mentioned image data and detect whether the difference between the pixel values has exceeded a predetermined threshold or not, thereby detecting motion from the above-mentioned image data. The motion detection unit 356 detects, in the above-mentioned image data, the region corresponding to a portion in which the difference between the pixel values has exceeded the above-mentioned predetermined threshold as a region in which motion has occurred.

Alternatively, in a case where the camera 10 or the camera 20 is implemented by an event-based camera, as image data obtained by the camera 10 or the camera 20, only pixels in which luminance changes have been detected and whose degree of luminance change has exceeded a predetermined threshold are output. In this case, the motion detection unit 356 can detect motion from the above-mentioned image data without performing comparison processing of pixel values between frames in the above-mentioned image data.

The motion detection unit 356 supplies the results of motion detection to the object detection unit 358.

The object detection unit 358 detects an object recognized as a predetermined object by the image recognition unit 354 and corresponding to a region in which motion has been detected by the motion detection unit 356. More specifically, the object detection unit 358 detects whether a region recognized as a predetermined object on image data used for image recognition by the image recognition unit 354 and a region in which motion has been detected on image data used for motion detection by the motion detection unit 356 correspond to each other or not. The object detection unit 358 distinguishes, depending on whether the region recognized as a predetermined object and the region in which motion has been detected correspond to each other or not, the treatment of the recognized predetermined object.

For example, in a case where the information processing system according to the present embodiment includes only one sensor, namely, the camera 10, the image recognition unit 354 and the motion detection unit 356 perform the processing of image recognition and the processing of motion detection, respectively, from the same image data acquired from the camera 10. In this case, the object detection unit 358 detects whether a region in which a predetermined object has been recognized by the image recognition unit 354 and a region in which motion has been detected by the motion detection unit 356 match or not on the image data. When determining that the regions match, the object detection unit 358 regards the recognized predetermined object as a detection target and outputs the result of detection as detection information to the output control unit 359. Meanwhile, when determining that the regions do not match, the object detection unit 358 does not regard the recognized predetermined object as a detection target and does not output detection information.

Alternatively, in a case where the information processing system according to the present embodiment includes two sensors, namely, the camera 10 and the camera 20, the image data used for image recognition by the image recognition unit 354 and the image data used for motion detection by the motion detection unit 356 are different image data. In this case, the object detection unit 358 detects whether a region in which a predetermined object has been recognized on image data obtained by the camera 10 and a region in which motion has been detected on image data obtained by the camera 20 correspond to each other or not. Several methods are conceivable as the method of detecting the correspondence of regions on two pieces of image data obtained by the camera 10 and the camera 20 by the object detection unit 358.

For example, the object detection unit 358 identifies the coordinates of the three-dimensional positions at which the camera 10 and the camera 20 are installed. The coordinates of the three-dimensional positions of the camera 10 and the camera 20 may be input to the information processing apparatus 30 by the operator of the information processing apparatus 30 and stored in the control information storage unit 320 in advance. Alternatively, in a case where the camera 10 and the camera 20 have a position measurement function using GNSS, the object detection unit 358 may acquire position information from the camera 10 and the camera 20, thereby identifying the coordinates of the three-dimensional positions of the camera 10 and the camera 20.

The object detection unit 358 calculates the coordinates of three-dimensional positions corresponding to a predetermined object recognized by the image recognition unit 354 and a region in which motion has been detected by the motion detection unit 356, on the basis of information regarding the distances to the subject or Depth images acquired from the camera 10 and the camera 20, and of the identified coordinates of the three-dimensional positions of the camera 10 and the camera 20. The object detection unit 358 may detect, on the basis of whether regions indicated by the calculated coordinates are the same or approximately similar or not, the correspondence of the regions.

In a case where the object detection unit 358 detects that a region in which a predetermined object has been recognized and a region in which motion has been detected correspond to each other, the object detection unit 358 outputs the result of detection to the output control unit 359. Further, in a case where the object detection unit 358 detects that the above-mentioned regions do not correspond to each other, the object detection unit 358 does not output the result of detection to the output control unit 359. With such a configuration, the information processing apparatus 30 outputs, in a case where not only a predetermined object is detected from image data but also it is detected that the recognized predetermined object is moving, the result of detection with the predetermined object regarded as a detection target. That is, the information processing apparatus 30 can distinguish between a case where equipment such as helmets or tools for civil engineering construction work detected from image data are at rest and a case where the equipment or the tools are moving, and can output the results of detection. By recognizing equipment such as a helmet or a tool for civil engineering construction work from image data, a person holding or wearing the equipment or tool can be indirectly detected. Moreover, since the information processing apparatus 30 according to the present embodiment outputs the result of detection of the equipment or tool only in a case where the equipment or tool is moving, the possibility of erroneously detecting a person by recognizing equipment or a tool placed on the ground can be reduced.

Moreover, the object detection unit 358 may identify, in a case where the result of image recognition supplied from the image recognition unit 354 indicates that two or more predetermined objects of types different from each other have been recognized, the coordinates of the three-dimensional positions of the two or more predetermined objects and detect whether the positional relation between the two or more predetermined objects satisfies predetermined conditions or not. As the predetermined conditions, the positional relation in a case where the objects O of types different from each other are being held or worn by the same person simultaneously is conceivable. For example, in a case where the worker U1 is wearing the object O2 (helmet) and holding the object O3 (LED traffic wand), it is estimated in terms of the positional relation between the object O2 (helmet) and the object O3 (LED traffic wand) that the object O2 (helmet) is often at a position with a relatively higher altitude than the object O3 (LED traffic wand).

For example, it is assumed that a result indicating the recognition of the object O2 (helmet) from image data obtained by the camera 10 and a result indicating the recognition of the object O3 (LED traffic wand) from image data obtained by the camera 20 have been supplied to the object detection unit 358. In this case, the object detection unit 358 identifies the coordinates of the three-dimensional positions of the object O2 (helmet) and the object O3 (LED traffic wand) on the basis of the image data and distance information or Depth images obtained by the camera 10 and the camera 20. Moreover, in a case where the object detection unit 358 detects that the object O2 (helmet) is at a position with a relatively higher altitude than the object O3 (LED traffic wand), the object detection unit 358 may output, to the output control unit 359, the result of detection with the object O2 (helmet) and the object O3 (LED traffic wand) regarded as detection targets.

As described above, the image recognition unit 354 recognizes two or more predetermined objects of types different from each other, and the object detection unit 358 detects whether the positional relation between the recognized two or more predetermined objects of types different from each other satisfies predetermined conditions or not, thereby enabling a further improvement in the accuracy of indirectly detecting people through image recognition from objects that people wear, such as helmets, and civil engineering tools such as traffic wands.

The output control unit 359 has a function of outputting object detection results on the basis of the above-mentioned results of detection by the object detection unit 358. More specifically, the output control unit 359 outputs, as the above-mentioned object detection results, at least one of information indicating whether a predetermined object has been detected or not, the position of the predetermined object, or information regarding the distance between the predetermined object and a predetermined reference point, which are supplied from the object detection unit 358. The predetermined reference point may be the position of the camera 10 or the camera 20, or may be the position of an object for which it is desired to output the distance from a worker, such as the construction machine M1.

Note that, several methods are conceivable as the method of outputting object detection results by the output control unit 359. For example, the output control unit 359 of the information processing apparatus 30 according to the present embodiment may perform control to generate a screen on the basis of the above-mentioned object detection result and cause the output apparatus 40 to display the screen in a mode visible to the user. Alternatively, the output control unit 359 may transmit the above-mentioned object detection results to an apparatus, such as a construction machine, configured to be communicable with the information processing apparatus 30, which is not illustrated in FIG. 1. With this configuration, it is also possible to implement applications such as automatically controlling apparatuses such as construction machines and temporarily stopping, in a case where a worker approaches a construction machine, the operation of the construction machine, or causing, for example, an alarm, which is not illustrated, to go off, on the basis of object detection results output from the output control unit 359.

### (Operation Unit 360)

The operation unit 360 is a component for the operator of the information processing apparatus 30 to input instructions or information to the information processing apparatus 30. For example, by operating the operation unit 360, the operator of the information processing apparatus 30 can input instructions to start or end the processing of image recognition and motion detection by the information processing apparatus 30.

### <3. Operation>

Subsequently, operation examples of the information processing system according to the present embodiment are described. As described above, the camera 10, the camera 20, and the information processing apparatus 30 included in the information processing system according to the present embodiment may adopt three types of configurations depending on the types of sensors to be employed. First, a description is given on an operation example in a case where the information processing apparatus 30 uses image data obtained by the camera 10 for the processing of image recognition and uses image data obtained by the camera 20 for the processing of motion detection.

### (First Operation Example)

FIG. 3 is a flowchart diagram illustrating a first operation example of the information processing system according to the present embodiment. This operation example is an operation example in a case where two different binocular RGB cameras are employed as the camera 10 and the camera 20.

First, the acquisition unit 310 of the information processing apparatus 30 acquires image data on RGB images including color information from the camera 10 and the camera 20 (S100). Next, the image recognition unit 354 of the information processing apparatus 30 performs image recognition of a predetermined object (worker U or object O) in the image data acquired from the camera 10 (S200). In a case where a predetermined object has not been recognized in the above-mentioned image data through image recognition by the image recognition unit 354 (S300/NO), the information processing apparatus 30 repeats the processing in S100 and S200 until a predetermined object is recognized.

In a case where a predetermined object has been recognized in the above-mentioned image data through image recognition by the image recognition unit 354 (S300/YES), the motion detection unit 356 detects motion from the image data acquired from the camera 20 (S400).

In a case where motion has not been detected from the above-mentioned image data by the motion detection unit 356 (S500/NO), the information processing apparatus 30 performs the processing in S100 to S400 again.

In a case where motion has been detected from the above-mentioned image data by the motion detection unit 356 (S500/YES), the object detection unit 358 attempts to detect an object recognized as a predetermined object by the image recognition unit 354 and corresponding to the region in which motion has been detected by the motion detection unit 356. Specifically, the object detection unit 358 detects whether the region recognized as a predetermined object on the image data acquired from the camera 10 and the region in which motion has been detected on the image data acquired from the camera 20 correspond to each other or not, on the basis of the distance to the subject and depth information obtained from the camera 10 and the camera 20. In a case where the object detection unit 358 detects that the above-mentioned regions correspond to each other, the object detection unit 358 outputs detection information including information indicating the type of the object recognized in the regions and the positions of the regions. Further, in a case where the above-mentioned regions do not correspond to each other, the object detection unit 358 does not output detection information to the output control unit 359. The output control unit 359 outputs, when receiving the detection information output from the object detection unit 358, an object detection result on the basis of the detection information (S700). For example, the output control unit 359 may generate, on the basis of the fact that a helmet has been detected from image data obtained by the camera 10 and the camera 20, a screen that allows the user to visually recognize information indicating that a person has been indirectly detected, the position at which the helmet has been detected, and information regarding the distance between the position and the construction machine M1, and may cause the output apparatus 40 to output the screen.

Next, in a case where the operator of the information processing apparatus 30 operates the operation unit 360, thereby inputting an instruction to end a series of processing (S800/YES), the information processing apparatus 30 ends the processing. The information processing apparatus 30 repeats the processing in S100 to S700 (S800/NO) until receiving an instruction to end processing.

The first operation example of the information processing system according to the present embodiment has been described above with reference to FIG. 3. Note that, in the above-mentioned first operation example, the example in which the camera 10 and the camera 20 are two binocular RGB cameras different from each other has been described. However, this operation example can also be applied to a case where the information processing system according to the present embodiment includes only one sensor, namely, the camera 10 that is a binocular RGB camera. In this case, the motion detection unit 356 of the information processing apparatus 30 may detect motion from the image data acquired from the camera 10 in S400. Moreover, the object detection unit 358 may detect, in S700, whether the region in which a predetermined object has been recognized by the image recognition unit 354 and the region in which motion has been detected by the motion detection unit 356 match or are approximately similar or not on the same image data acquired from the camera 10.

As described above, the object detection unit 358 of the information processing apparatus 30 according to the present embodiment outputs, in a case where a region in which a predetermined object has been recognized by the image recognition unit 354 and a region in which motion has been detected by the motion detection unit 356 correspond to each other, information regarding detection with the above-mentioned predetermined object regarded as a detection target to the output control unit 359. For example, it is assumed that the object O1 (helmet) has been recognized by the image recognition unit 354 on image data acquired from the camera 10. The object O1 (helmet) is placed on the stand and is at rest. Thus, the motion detection unit 356 does not detect motion in the region corresponding to the object O1 (helmet) on an image acquired from the camera 10 or the camera 20. In this case, even when the object O1 (helmet) is recognized by the image recognition unit 354, the object detection unit 358 does not regard the object O1 (helmet) as a detection target and does not output detection information to the output control unit 359. That is, according to this operation example, whether a predetermined object, such as a helmet, detected through image recognition is placed on the ground without being worn by a person or is being worn by a person can be distinguished, on the basis of whether motion has been detected in the region corresponding to the predetermined object. Moreover, in a case where motion has been detected in the region corresponding to the helmet recognized through image recognition, detection information is output on the basis of the fact that the helmet has been recognized. Thus, in a case where equipment worn by workers or tools held by workers are recognized through image recognition to indirectly detect people, the detection accuracy can be improved.

### (Second Operation Example)

Subsequently, an operation example in a case where the camera 10 and the camera 20 are TOF cameras is described. This operation example is an operation example in a case where two different TOF cameras are employed as the camera 10 and the camera 20. Alternatively, this operation example can also be applied to a case where the information processing system according to the present embodiment includes only one sensor, namely, the camera 10 that is a TOF camera.

FIG. 4 is a flowchart diagram illustrating a second operation example of the information processing system according to the present embodiment. Note that, in FIG. 4, the processing in S100, S300, S500, and S800 is as described above with reference to FIG. 3, and hence the detailed descriptions are omitted here.

First, the processing in S100 is performed. Subsequently, the image recognition unit 354 of the information processing apparatus 30 performs image recognition of a predetermined object in the image data on the infrared image acquired from the camera 10 (S202).

In a case where a predetermined object has been recognized in the above-mentioned image data by the image recognition unit 354 (S300/YES), the motion detection unit 356 detects motion from the image data acquired from the camera 20 (S402). Subsequently, the processing in S500 is performed.

In a case where motion has been detected from the above-mentioned image data by the motion detection unit 356 (S500/YES), the object detection unit 358 detects whether the region recognized as a predetermined object on the image data acquired from the camera 10 and the region in which motion has been detected on the image data acquired from the camera 20 correspond to each other or not, on the basis of information regarding the distance to the subject or Depth image data acquired from the camera 10 and the camera 20. As in the first operation example, in a case where the object detection unit 358 detects that the above-mentioned regions correspond to each other, the object detection unit 358 outputs detection information to the output control unit 359. Further, in a case where the object detection unit 358 detects that the above-mentioned regions do not correspond to each other, the object detection unit 358 does not output detection information to the output control unit 359. The output control unit 359 outputs an object detection result on the basis of the detection information supplied from the object detection unit 358 (S702). Subsequently, the processing in S800 is performed.

The second operation example of the information processing system according to the present embodiment has been described above with reference to FIG. 4. TOF cameras enable simultaneously acquiring image data to be used for image recognition and information regarding the distance to a subject or Depth image data by a single camera. Thus, in a case where it is desired to perform processing such as automatically controlling a construction machine or causing an alarm to go off using an object detection result output by the output control unit 359, a reduction in latency can be expected. In particular, in a case where the information processing system according to the present embodiment includes only one sensor, namely, the camera 10 that is a TOF camera, the effect as described above can be expected.

### (Third Operation Example)

Subsequently, an operation example in a case where the camera 10 is a binocular RGB camera and the camera 20 is an event-based camera is described. FIG. 5 is a flowchart diagram illustrating a third operation example of the information processing system according to the present embodiment. Note that, in FIG. 5, the processing in S100, S300, S500, and S800 is as described above with reference to FIG. 1, and hence the detailed descriptions are omitted here.

Further, in this operation example, it is assumed that the positions, orientations, and angles of view of the camera 10 and the camera 20 are set in advance by the user of the information processing apparatus 30 when the camera 10 and the camera 20 are installed at a construction site. Further, it is assumed that information regarding the installation conditions of the camera 10 and the camera 20, which include the positions, orientations, and angles of view, is stored in the control information storage unit 320 of the information processing apparatus 30.

First, the processing in S100 is performed. Subsequently, the image recognition unit 354 of the information processing apparatus 30 performs image recognition of a predetermined object in the image data on the RGB image acquired from the camera 10 (S204).

In a case where a predetermined object has been recognized in the above-mentioned image data by the image recognition unit 354 (S300/YES), the motion detection unit 356 detects motion from the image data acquired from the camera 20, which is obtained by the event-based camera (S404).

In this operation example, as image data obtained by the camera 20, only pixels in which luminance changes have been detected and whose degree of luminance change has exceeded a predetermined threshold are output. Thus, the motion detection unit 356 outputs the region corresponding to the above-mentioned pixel portions output from the camera 20 as a region in which motion has been detected to the object detection unit 358. Subsequently, the processing in S500 is performed.

In a case where motion has been detected from the above-mentioned image data by the motion detection unit 356 (S500/YES), the object detection unit 358 detects whether the region recognized as a predetermined object on the image data acquired from the camera 10 and the region in which motion has been detected on the image data acquired from the camera 20 correspond to each other or not. The object detection unit 358 can detect the correspondence of the above-mentioned regions on the basis of information regarding the distance to the subject or depth information obtained from the camera 10 and information regarding the installation conditions of the camera 10 and the camera 20.

For example, the object detection unit 358 identifies the coordinates of three-dimensional position information regarding the predetermined object recognized by the image recognition unit 354, on the basis of the image data and the above-mentioned distance information or depth information obtained from the camera 10. Moreover, the object detection unit 358 identifies the two-dimensional coordinates within the screen of the angle of view of the camera 20 of the region in which motion has been detected on the image data obtained from the camera 20. The object detection unit 358 converts, on the basis of information regarding the installation position, orientation, and angle of view of the camera 20, the three-dimensional coordinates of the region in which the predetermined object has been recognized on the image obtained by the camera 10 to two-dimensional coordinates within the angle of view of the camera 20, thereby detecting the correspondence of the regions.

Alternatively, a case where the positions, orientations, and angles of view of the camera 10 and the camera 20 are approximately similar enough to be regarded as the same in region correspondence detection by the object detection unit 358 is also conceivable. In this case, the object detection unit 358 can regard the screen region of the image data obtained by the camera 10 and the screen region of the image data obtained by the camera 20 as being the same and detect the correspondence of the above-mentioned regions. In this case, the camera 10 may be a monocular RGB camera.

As in the first operation example, in a case where the object detection unit 358 detects that the above-mentioned regions correspond to each other, the object detection unit 358 outputs detection information to the output control unit 359. Meanwhile, in a case where the object detection unit 358 detects that the above-mentioned regions do not correspond to each other, the object detection unit 358 does not output detection information to the output control unit 359. When receiving the detection information output from the object detection unit 358, the output control unit 359 outputs an object detection result on the basis of the detection information (S704). Subsequently, the processing in S800 is performed.

The third operation example of the information processing system according to the present embodiment has been described above with reference to FIG. 5. In this operation example, an event-based camera is employed for the camera 20. With this configuration, it is possible to detect, on the information processing apparatus 30 side, motion from image data obtained by the camera 20 without performing processing such as pixel comparison between the frames of the above-mentioned image data. Thus, the processing load of motion detection performed on the information processing apparatus 30 side is reduced, and a reduction in power consumption of the information processing apparatus 30 can be expected.

### (Fourth Operation Example)

Subsequently, an operation example in a case where the camera 10 is a TOF camera and the camera 20 is an event-based camera is described. FIG. 6 is a flowchart diagram illustrating a fourth operation example of the information processing system according to the present embodiment. Note that S100, S300, S500, and S800 in FIG. 6 are as described above with reference to FIG. 3, and hence the detailed descriptions are omitted here. Further, S404 and S704 are as described above with reference to FIG. 5, and hence the detailed descriptions are omitted here.

First, the processing in S100 is performed. Subsequently, the image recognition unit 354 of the information processing apparatus 30 performs image recognition of a predetermined object (worker U or object O) in the image data on the infrared image acquired from the camera 10 (S206). Subsequently, the processing in S300 to S800 is performed.

The fourth operation example of the information processing system according to the present embodiment has been described above with reference to FIG. 6. In this operation example, an event-based camera is employed for the camera 20 as in the third operation example. With this configuration, it is possible to detect, on the information processing apparatus 30 side, motion from image data obtained by the camera 20 without performing processing such as pixel comparison between the frames of the above-mentioned image data. Thus, the processing load of motion detection performed on the information processing apparatus 30 side is reduced, and a reduction in power consumption of the information processing apparatus 30 can be expected.

### (Fifth Operation Example)

Subsequently, an operation example in a case where the camera 10 is an RGB camera and the camera 20 is a TOF camera is described. This configuration corresponds to a case where the second configuration described above is employed.

FIG. 7 is a flowchart diagram illustrating a fifth operation example of the information processing system according to the present embodiment. Note that S100, S300, S500, and S800 in FIG. 7 are as described above with reference to FIG. 3, and hence the detailed descriptions are omitted here. Further, S204 and S402 in FIG. 7 are as described above with reference to FIG. 5 and FIG. 4, respectively, and hence the detailed descriptions are omitted.

First, the processing in S100 to S500 is performed.

In a case where motion has been detected from the infrared image data acquired from the camera 20 by the motion detection unit 356 (S500/YES), the object detection unit 358 detects whether the region in which a predetermined object has been recognized by the image recognition unit 354 on the RGB image data acquired from the camera 10 and the region in which motion has been detected on the above-mentioned infrared image data by the motion detection unit 356 correspond to each other or not.

In a case where the object detection unit 358 detects that the above-mentioned regions correspond to each other, the object detection unit 358 outputs detection information to the output control unit 359. Further, in a case where the object detection unit 358 detects that the above-mentioned regions do not correspond to each other, the object detection unit 358 does not output detection information to the output control unit 359. When receiving the detection information output from the object detection unit 358, the output control unit 359 outputs an object detection result on the basis of the detection information. Subsequently, the processing in S800 is performed.

The fifth operation example of the information processing system according to the present embodiment has been described above with reference to FIG. 7. The operation examples in which, after the processing of image recognition by the image recognition unit 354 is performed, the processing of motion detection by the motion detection unit 356 is performed in the information processing apparatus 30 have been described so far. However, the information processing apparatus 30 according to the present embodiment may perform the processing of motion detection by the motion detection unit 356 first, and then may perform the processing of image recognition by the image recognition unit 354. Now, operation examples of the information processing system according to the present embodiment in which the processing is performed in this manner are described.

### (Sixth Operation Example)

First, another operation example in a case where the camera 10 and the camera 20 are binocular RGB cameras as in the first operation example is described. FIG. 8 is a flowchart diagram illustrating a sixth operation example of the information processing system according to the present embodiment. Note that S100, S700, and S800 in FIG. 8 are as described above with reference to FIG. 3, and hence the detailed descriptions are omitted here.

First, the processing in S100 is performed. Subsequently, the motion detection unit 356 of the information processing apparatus 30 performs the processing of detecting motion from the image data acquired from the camera 20 (S250). In a case where motion has not been detected from the image data (S350/NO), the information processing apparatus 30 repeats the processing in S100 and S250 until motion is detected from the image data acquired from the camera 20.

In a case where motion has been detected in the above-mentioned image data (S350/YES), the image recognition unit 354 identifies an object recognition target region on the image data acquired from the camera 10 on the basis of the region in which motion has been detected by the motion detection unit 356 (S450).

The image recognition unit 354 recognizes a predetermined object from the identified object recognition target region (S550). In a case where a predetermined object has not been recognized from the above-mentioned image data by the image recognition unit 354 (S650/NO), the information processing apparatus 30 performs the processing in S100 to S550 again.

In a case where a predetermined object has been recognized from the above-mentioned image data by the image recognition unit 354 (S650/YES), the processing in S700 to S800 is performed.

### (Seventh Operation Example)

The sixth operation example of the information processing system according to the present embodiment has been described above with reference to FIG. 8. Subsequently, with reference to FIG. 9, a seventh operation example of the information processing system according to the present embodiment is described. This operation example is an operation example in a case where two different TOF cameras are employed for the camera 10 and the camera 20 as in the second operation example. Alternatively, this operation example can also be applied to a case where the information processing system according to the present embodiment includes only one sensor, namely, the camera 10 that is a TOF camera.

FIG. 9 is a flowchart diagram illustrating a seventh operation example of the information processing system according to the present embodiment. Note that S100, S800, and S702 in FIG. 9 are as described above with reference to FIG. 3 and FIG. 4, respectively, and hence the detailed descriptions are omitted here. Further, S350, S450, and S650 in FIG. 9 are as described above with reference to FIG. 8, and hence the detailed descriptions are omitted here.

First, the processing in S100 is performed. Subsequently, the motion detection unit 356 of the information processing apparatus 30 performs the processing of motion detection in the image data on the infrared image acquired from the camera 20 (S252). Subsequently, the processing in S350 and S450 is performed.

Next, the image recognition unit 354 performs image recognition of a predetermined object from the object recognition target region identified on the image data acquired from the camera 10 (S552). Subsequently, the processing in S650 to S800 is performed.

### (Eighth Operation Example)

The sixth operation example of the information processing system according to the present embodiment has been described above with reference to FIG. 9. Subsequently, another operation example in a case where the camera 10 is an event-based camera and the camera 20 is a binocular RGB camera as in the third operation example is described.

FIG. 10 is a flowchart diagram illustrating an eighth operation example of the information processing system according to the present embodiment. Note that S100, S800, and S702 in FIG. 10 are as described above with reference to FIG. 3 and FIG. 5, respectively, and hence the detailed descriptions are omitted here. Further, S350, S450, and S650 in FIG. 10 are as described above with reference to FIG. 8, and hence the detailed descriptions are omitted here.

First, the processing in S100 is performed. Subsequently, the motion detection unit 356 of the information processing apparatus 30 performs the processing of motion detection in the image data on the image acquired from the camera 20, which is obtained by the event-based camera (S254). Subsequently, the processing in S350 and S450 is performed.

Next, the image recognition unit 354 performs image recognition of a predetermined object from the object recognition target region identified on the image data acquired from the camera 10 (S554). Subsequently, the processing in S650 to S800 is performed.

### (Ninth Operation Example)

The eighth operation example of the information processing system according to the present embodiment has been described above with reference to FIG. 10. Subsequently, another operation example in a case where the camera 10 is an event-based camera and the camera 20 is a TOF camera as in the fourth operation example is described.

FIG. 11 is a flowchart diagram illustrating a ninth operation example of the information processing system according to the present embodiment. Note that S100, S800, and S704 in FIG. 11 are as described above with reference to FIG. 3 and FIG. 4, respectively, and hence the detailed descriptions are omitted here. Further, S350, S450, and S650 in FIG. 11 are as described above with reference to FIG. 8, and hence the detailed descriptions are omitted here.

First, the processing in S100 is performed. Subsequently, the motion detection unit 356 of the information processing apparatus 30 performs the processing of motion detection in the image data on the image acquired from the camera 20, which is obtained by the event-based camera (S256). Subsequently, the processing in S350 and S450 is performed.

Next, the image recognition unit 354 performs image recognition of a predetermined object from the object recognition target region identified on the image data acquired from the camera 10 (S556). Subsequently, the processing in S650 to S800 is performed.

### (Tenth Operation Example)

The ninth operation example of the information processing system according to the present embodiment has been described above with reference to FIG. 11. Subsequently, another operation example in a case where the camera 10 is a binocular RGB camera and the camera 20 is a TOF camera as in the fifth operation example is described. FIG. 12 is a flowchart diagram illustrating a tenth operation example of the information processing system according to the present embodiment.

Note that S100, S700, and S800 in FIG. 12 are as described above with reference to FIG. 3, and hence the detailed descriptions are omitted here. Further, S350, S450, and S650 in FIG. 12 are as described above with reference to FIG. 9, and hence the detailed descriptions are omitted here. Moreover, S252 and S554 are as described above with reference to FIG. 9 and FIG. 10, respectively, and hence the descriptions are omitted.

First, the processing in S100 to S350 is performed. In a case where motion has been detected from the infrared image data acquired from the camera 20 by the motion detection unit 356 (S350/YES), the image recognition unit 354 identifies, on the RGB image data acquired from the camera 10, the region corresponding to the region in which motion has been detected from the above-mentioned infrared image data as an object recognition target region. The image recognition unit 354 performs image recognition of a predetermined object from the identified object recognition target region (S554). Subsequently, the processing in S650 to S800 is performed.

The tenth operation example of the information processing system according to the present embodiment has been described above with reference to FIG. 12. In the sixth operation example to tenth operation example described above, the examples in which, after the processing of motion detection by the motion detection unit 356 of the information processing apparatus 30 is performed, image recognition by the image recognition unit 354 is performed have been described. Further, in the sixth operation example to the tenth operation example, the image recognition unit 354 narrows down, on the basis of a region in which motion has been detected by the motion detection unit 356 on image data obtained by the camera 20, a target region in which image recognition is to be performed on image data and then performs the processing of image recognition. With this configuration, the processing load of image recognition by the image recognition unit 354 can be reduced. Moreover, a reduction in power consumption of the information processing apparatus 30 can be expected.

### (Eleventh Operation Example)

Subsequently, with reference to FIG. 13, an eleventh operation example of the information processing system according to the present embodiment is described. This operation example is different from the first operation example and second operation example described so far in the configurations of the camera 10, the camera 20, and the information processing apparatus 30 as follows. That is, the information processing apparatus 30 performs the processing of image recognition of predetermined objects of types different from each other from image data obtained by the camera 10 and image data obtained by the camera 20.

FIG. 13 is a flowchart diagram illustrating an eleventh operation example of the information processing system according to the present embodiment. Note that, in FIG. 14, the processing in S100, S700, and S800 is as described above with reference to FIG. 3, and hence the detailed descriptions are omitted here.

First, the processing in S100 is performed. Subsequently, the image recognition unit 354 of the information processing apparatus 30 performs image recognition from the image data obtained by the camera 10 to recognize a predetermined object (S290). Here, the processing of image recognition performed by the image recognition unit 354 in S290 is referred to as "image recognition A." Further, in this operation example, it is assumed that the object O2 (helmet) has been recognized from the above-mentioned image data by the image recognition unit 354 in image recognition A.

In a case where a predetermined object has not been recognized from the above-mentioned image data by the image recognition unit 354 (S390/NO), the processing in S100 and S290 is repeated.

In a case where a predetermined object has been recognized from the above-mentioned image data by the image recognition unit 354 (S390/YES), the image recognition unit 354 recognizes, from the image data obtained from the camera 20, a predetermined object of a different type from that of the object recognized through image recognition A through image recognition (S490). Here, the processing of image recognition performed by the image recognition unit 354 in S490 is referred to as "image recognition B." Further, in this operation example, it is assumed that the object O4 (reflective vest) has been recognized from the above-mentioned image data by the image recognition unit 354 in image recognition B.

In a case where a predetermined object of a different type from that of the predetermined object recognized through image recognition A has been recognized by the image recognition unit 354 in image recognition B (S590/YES), the processing in S700 and S800 is performed.

Here, the predetermined object of a different type from that of the predetermined object recognized through image recognition A is desirably an object that a single worker may possibly wear or hold simultaneously and is of a different type from that of the object recognized through image recognition A. For example, in a case where a helmet has been recognized through image recognition A, through image recognition B, an object that a worker already wearing the helmet may possibly hold or wear in addition to the helmet is desirably recognized. Examples of the object may include various civil engineering tools such as traffic wands and other worker equipment such as reflective vests.

In a case where a predetermined object of a different type from that of the predetermined object recognized through image recognition A has not been recognized by the image recognition unit 354 in image recognition B (S590/NO), the information processing apparatus 30 repeats the processing in S100 to S490.

The eleventh operation example of the information processing system according to the present embodiment has been described above with reference to FIG. 13. As described above, in this operation example, in a case where, among predetermined objects learned by the learning unit 352 in advance, two predetermined objects of types different from each other have been recognized in image recognition by the image recognition unit 354, the object detection unit 358 outputs detection information. In other words, the object detection unit 358 does not output detection information when only one object among the predetermined objects has been recognized. In this operation example, on the basis of the fact that two predetermined objects, namely, the object O2 (helmet) and the object O4 (reflective vest) worn by the worker U1 have been recognized, the object detection unit 358 outputs detection information to the output control unit 359. With this configuration, for example, in a case where the object detection unit 358 indirectly detects a person on the basis of the fact that a predetermined object such as the object O2 (helmet) has been recognized in image recognition by the image recognition unit 354, the detection accuracy of the person by the object detection unit 358 can be improved.

Further, in S590 of the eleventh operation example, the object detection unit 358 may detect whether the positions of the predetermined objects recognized through image recognition A and image recognition B satisfy predetermined conditions or not. In this case, the object detection unit 358 may output detection information to the output control unit 359 only in a case where the above-mentioned positions satisfy the predetermined conditions. The predetermined conditions may include, for example, that a positional relation in a case where the objects O of types different from each other are being held or worn by the same person simultaneously is satisfied. For example, in a case where the worker U1 is wearing the object O2 (helmet) and holding the object O3 (LED traffic wand), it is estimated in terms of the positional relation between the object O2 (helmet) and the object O3 (LED traffic wand) that the object O2 (helmet) is often at a position with a relatively higher altitude than the object O3 (LED traffic wand). Thus, the object detection unit 358 may compare, depending on the types of predetermined objects recognized through image recognition A and image recognition B, the altitudes of the predetermined objects to detect whether the above-mentioned predetermined conditions are satisfied. With this configuration, the accuracy of indirectly detecting people through image recognition from objects that people wear, such as helmets, and civil engineering tools such as traffic wands can be further improved.

### <4. Modified Example>

The operation examples of the information processing system according to the present embodiment have been described above with reference to FIG. 3 to FIG. 14. Note that, the information processing system according to the present embodiment can also operate in accordance with modified examples described below. Now, such modified examples are described.

### (First Modified Example)

In a first modified example, the information processing apparatus 30 according to the present embodiment narrows down, after performing the processing of image recognition by the image recognition unit 354, the region corresponding to a predetermined object recognized by the image recognition unit 354 on image data obtained by the camera 20 as a motion detection target region. Then, the motion detection unit 356 detects motion in the motion detection target region.

FIG. 14 is a flowchart diagram illustrating the first modified example of the operation of the information processing system according to the present embodiment. Note that S100, S200, S300, S500, S700, and S800 in FIG. 14 are as described above with reference to FIG. 3, and hence the detailed descriptions are omitted here.

First, the processing in S100 to S300 is performed. Subsequently, in a case where a predetermined object has been recognized in the image data acquired from the camera 10 by the image recognition unit 354 (S300/YES), the motion detection unit 356 identifies, on the image data acquired from the camera 20, the region corresponding to the predetermined object recognized by the image recognition unit 354 as a motion detection target region (S310).

The motion detection unit 356 detects motion in the identified motion detection target region (S410). Subsequently, the processing in S500 to S800 is performed.

The first modified example has been described above with reference to FIG. 14. In this modified example, the motion detection unit 356 narrows down a target region in which motion is to be detected on image data on the basis of the result of image recognition by the image recognition unit 354. Then, the motion detection unit 356 detects motion in the range of the narrowed-down motion detection target region. With this configuration, the load of the processing of motion detection by the motion detection unit 356 can be reduced. Further, a reduction in power consumption of the information processing apparatus 30 can be expected. Further, it is possible to implement the above-mentioned modified example by incorporating the modified example in the first operation example to the fifth operation example.

Moreover, it is also possible to combine the processing of motion detection by the motion detection unit 356 with the first modified example described above. More specifically, before the processing in S700 illustrated in FIG. 14, the motion detection unit 356 may detect, on the image data obtained by the camera 10 or the camera 20, motion from the regions corresponding to the predetermined objects of different types recognized through image recognition A and image recognition B. The object detection unit 358 may output detection information to the output control unit 359 in a case where motion has been detected from the regions by the motion detection unit 356. With this configuration, the accuracy of detecting people using image recognition by the information processing apparatus 30 can be further improved.

### (Second Modified Example)

Subsequently, a second modified example is described. In the second modified example, the information processing apparatus 30 executes image recognition processing by the image recognition unit 354 and motion detection processing by the motion detection unit 356 in parallel.

FIG. 15 is a flowchart diagram illustrating the second modified example of the operation of the information processing system according to the present embodiment. Note that S100, S700, and S800 in FIG. 15 are as described above with reference to FIG. 3, and hence the detailed descriptions are omitted here.

First, the processing in S100 is performed. Subsequently, using the image data acquired from the camera 10 and the camera 20 in S100, the processing of motion detection by the motion detection unit 356 (S281) and the processing of image recognition by the image recognition unit 354 (S282) are executed in parallel.

In a case where motion has been detected by the motion detection unit 356 in S281 and a predetermined object has been recognized by the image recognition unit 354 in S282 (S480/YES), the processing in S700 and S800 is performed.

In a case where motion has not been detected by the motion detection unit 356 in S281 or a predetermined object has not been recognized by the image recognition unit 354 in S282 (S480/NO), the processing in S100, S281, and S282 is repeated.

The second modified example of the operation of the information processing system according to the present embodiment has been described above with reference to FIG. 15. As described above, in this operation example, the processing of image recognition by the image recognition unit 354 and the processing of motion detection by the motion detection unit 356 are executed in parallel. With this configuration, the latency from the detection of a predetermined object on image data obtained from the camera 10 by the image recognition unit 354 and the detection of motion on image data obtained from the camera 20 by the motion detection unit 356 to the output of the result of detection by the object detection unit 358 can be reduced. It is possible to apply this modified example to the first operation example to eleventh operation example described above and the first modified example.

### (Modified Example of System Configuration)

Note that, in the example illustrated in FIG. 1, the information processing apparatus 30 according to the present embodiment is installed at the office or the like at the construction site and configured to be communicable with the camera 10 and the camera 20 via the local network 5. However, the information processing system according to the present embodiment can adopt other system configurations. For example, the processing of image recognition, the processing of motion detection, and the output processing of detection information by the information processing apparatus 30 may be performed by an edge server or cloud server outside the local area network configured to be communicable with the information processing apparatus 30. The information processing apparatus 30 may receive processing results from the edge server or the cloud server and perform, on the basis of the processing results, output control of object detection results to the output apparatus 40.

FIG. 16 is an explanatory diagram illustrating a modified example of the configuration of the information processing system according to the present embodiment. In FIG. 16, the worker U, the object O, the camera 10, the camera 20, the output apparatus 40, and the construction machine M1 are as described above with reference to FIG. 1, and hence the detailed descriptions are omitted here.

As illustrated in FIG. 16, the information processing system according to this modified example includes an edge server 50 and a cloud server 60. The edge server 50 is configured to be communicable with the information processing apparatus 30 via a base station 6. Further, the cloud server 60 is configured to be communicable with the information processing apparatus 30 and the edge server 50 via the base station 6 and a network 7.

In this modified example, the information processing apparatus 30 functions as a relay server configured to transmit image data acquired from the camera 10 and the camera 20 to the edge server 50 or the cloud server 60. Moreover, the information processing apparatus 30 controls the output apparatus 40 to output object detection results, on the basis of image recognition processing, motion detection processing, or detection information received from the edge server 50 or the cloud server 60.

The edge server 50 is a server that is installed outside the local area network to which the camera 10, the camera 20, and the information processing apparatus 30 belong, and communicates with the information processing apparatus 30 via the base station 6. The edge server 50 may have functions equivalent to the image recognition unit 354 and the motion detection unit 356 of the information processing apparatus 30. For example, the edge server 50 may perform the processing of recognizing predetermined objects through image recognition from image data from the camera 10 received from the information processing apparatus 30. Further, the edge server 50 may perform the processing of motion detection from image data acquired from the camera 20. Moreover, the edge server 50 may transmit the results of image recognition processing and the results of motion detection processing to the cloud server 60 via the network 7.

The cloud server 60 is a cloud server configured to be communicable with the information processing apparatus 30 and the edge server 50 via the base station 6 and the network 7. The cloud server 60 may have a function equivalent to the object detection unit 358 of the information processing apparatus 30. For example, the cloud server 60 may receive the results of image recognition processing and the results of motion detection processing from the edge server 50 and output detection information. The cloud server 60 may transmit the detection information to the information processing apparatus 30.

Alternatively, the edge server 50 may perform the processing of image recognition, the processing of motion detection, and the output processing of detection information described above and transmit the results of processing to the information processing apparatus 30.

With the system configuration as described above, the processing of image recognition by the image recognition unit 354, the processing of motion detection by the motion detection unit 356, and the output processing of detection information by the object detection unit 358 of the information processing apparatus 30 are executed by the information processing apparatus 30, the edge server 50, and the cloud server 60 in a distributed manner. Such a modified example may be employed in a case where a latency desirable for a purpose of use of object detection results output by the information processing system according to the present embodiment can be ensured. With such a modified example, the user of the information processing system according to the present disclosure can flexibly configure the system depending on the hardware resources that can be introduced to configure the information processing system.

### <5. Hardware Configuration Example>

The embodiment of the present disclosure has been described above. The processing of image recognition, the processing of detecting motion from image data, the processing of detecting the correspondence of a region in which a predetermined object has been recognized and a region in which motion has been detected on image data, and the output processing of detection information by the information processing apparatus 30, which are described above, are implemented through collaboration between software and the hardware of the information processing apparatus 30. In the following, a hardware configuration example of the information processing apparatus 30 according to the embodiment of the present disclosure is described. Note that, the hardware configurations of the camera 10, the camera 20, the edge server 50, and the cloud server 60 may be implemented similarly to the hardware configuration of the information processing apparatus 30.

The processing by the camera 10, the camera 20, the information processing apparatus 30, the edge server 50, and the cloud server 60 may be implemented by one or a plurality of information processing apparatuses. FIG. 17 is a block diagram illustrating a hardware configuration example of the information processing apparatus 30 according to the present disclosure. Note that, the hardware configuration example of the information processing apparatus 30 described below is merely an example of the hardware configurations of the information processing apparatus 30, the edge server 50, and the cloud server 60. Thus, it is not necessary for each of the camera 10, the camera 20, the information processing apparatus 30, the edge server 50, and the cloud server 60 to have the complete hardware configuration illustrated in FIG. 17. Further, the camera 10, the camera 20, the information processing apparatus 30, the edge server 50, or the cloud server 60 may not include a part of the hardware configuration illustrated in FIG. 17.

As illustrated in FIG. 17, the information processing apparatus 900 includes a CPU 901, a ROM (Read Only Memory) 903, and a RAM 905. Further, the information processing apparatus 900 may include a host bus 907, a bridge 909, an external bus 911, an interface 913, an input apparatus 915, an output apparatus 917, a storage apparatus 919, a drive 921, a connection port 923, and a communication apparatus 925. The information processing apparatus 900 may include a processing circuit, such as a GPU (Graphics Processing Unit), a DSP (Digital Signal Processor), or an ASIC (Application Specific Integrated Circuit), instead of or together with the CPU 901.

The CPU 901 functions as an arithmetic operation processing apparatus and a control apparatus and controls some or all of the operations in the information processing apparatus 900 in accordance with various programs recorded on the ROM 903, the RAM 905, the storage apparatus 919, or a removable recording medium 927. The ROM 903 stores programs, arithmetic operation parameters, and the like to be used by the CPU 901. The RAM 905 temporarily stores programs to be used in the execution of the CPU 901, parameters that change as appropriate in the execution, and the like. The CPU 901, the ROM 903, and the RAM 905 are connected to each other via the host bus 907 including an internal bus such as a CPU bus. Moreover, the host bus 907 is connected to the external bus 911 such as a PCI (Peripheral Component Interconnect/Interface) bus via the bridge 909.

For example, the input apparatus 915 is an apparatus to be operated by the user, such as a button. The input apparatus 915 may include a mouse, a keyboard, a touch panel, a switch, a lever, and the like. Further, the input apparatus 915 may include a microphone configured to detect the voice of the user. The input apparatus 915 may be, for example, a remote control apparatus utilizing infrared light or other types of radio waves. Alternatively, the input apparatus 915 may be external connection equipment 929, such as a mobile phone, compatible with the operation of the information processing apparatus 900. The input apparatus 915 includes an input control circuit configured to generate input signals on the basis of information input by the user and output the input signals to the CPU 901. The user operates the input apparatus 915, thereby inputting various types of data to the information processing apparatus 900 or instructing the information processing apparatus 900 to perform processing operations.

Further, the input apparatus 915 may include an imaging apparatus and a sensor. The imaging apparatus is, for example, an apparatus configured to capture real space using an imaging element, such as a CCD (Charge Coupled Device) or a CMOS (Complementary Metal Oxide Semiconductor), and various members such as lenses for controlling the formation of a subject image on the imaging element, to thereby generate a captured image. The imaging apparatus may be an apparatus configured to capture still images or an apparatus configured to capture moving images.

Examples of the sensor include various sensors such as range sensors, acceleration sensors, gyro sensors, geomagnetic sensors, vibration sensors, light sensors, and sound sensors. The sensor acquires, for example, information regarding the state of the information processing apparatus 900 itself, such as the posture of the housing of the information processing apparatus 900, and information regarding the surrounding environment of the information processing apparatus 900, such as brightness and noise around the information processing apparatus 900. Further, the sensor may include a GPS (Global Positioning System) sensor configured to receive GPS signals to measure the latitude, longitude, and altitude of the apparatus.

The output apparatus 917 includes an apparatus capable of notifying the user of acquired information visually or audibly. The output apparatus 917 may be, for example, a display apparatus such as an LCD (Liquid Crystal Display) or an organic EL (ElectroLuminescence) display, or a sound output apparatus such as a speaker or headphones. Further, the output apparatus 917 may include a PDP (Plasma Display Panel), a projector, a hologram, or a printer apparatus, or the like. The output apparatus 917 outputs results obtained by the processing by the information processing apparatus 900 as video such as text or images or as sound such as voice or audio. Further, the output apparatus 917 may include, for example, a lighting apparatus configured to light up the surroundings.

The storage apparatus 919 is an apparatus for data storage that is configured as an example of a storage unit of the information processing apparatus 900. The storage apparatus 919 includes, for example, a magnetic storage device such as an HDD (Hard Disk Drive), a semiconductor storage device, an optical storage device, or a magneto-optical storage device. The storage apparatus 919 stores programs or various types of data to be executed by the CPU 901, various types of data acquired from the outside, or the like.

The drive 921 is a reader/writer for the removable recording medium 927 such as a magnetic disk, an optical disc, a magneto-optical disk, or a semiconductor memory. The drive 921 is built in the information processing apparatus 900 or attached externally thereto. The drive 921 reads out information recorded on the mounted removable recording medium 927 and outputs the information to the RAM 905. Further, the drive 921 writes records into the mounted removable recording medium 927.

The connection port 923 is a port for directly connecting equipment to the information processing apparatus 900. The connection port 923 may be, for example, a USB (Universal Serial Bus) port, an IEEE 1394 port, or an SCSI (Small Computer System Interface) port. Further, the connection port 923 may be an RS-232C port, an optical audio terminal, an HDMI (registered trademark) (High-Definition Multimedia Interface) port, or the like. With the connection port 923 connected to the external connection equipment 929, various types of data may be exchanged between the information processing apparatus 900 and the external connection equipment 929.

The communication apparatus 925 is, for example, a communication interface including a communication device or the like for establishing a connection to the local network 5 or a communication network with the base station 6. The communication apparatus 925 may be, for example, a communication card for a wired or wireless LAN (Local Area Network), Bluetooth (registered trademark), Wi-Fi (registered trademark), or WUSB (Wireless USB). Further, the communication apparatus 925 may also be a router for optical communication, a router for ADSL (Asymmetric Digital Subscriber Line), a modem for various types of communication, or the like. The communication apparatus 925 sends and receives, for example, signals or the like to and from the Internet or other communication equipment using a predetermined protocol such as TCP/IP. Further, the local network 5 or the communication network with the base station 6 connected to the communication apparatus 925 is a network established through wired or wireless connection and is, for example, the Internet, a home LAN, infrared communication, radio wave communication, or satellite communication.

### <6. Conclusion>

The preferred embodiment of the present disclosure has been described in detail above with reference to the attached drawings, but the present disclosure is not limited to the example. It is apparent that various changes or modifications could be arrived at by persons who have ordinary knowledge in the technical field to which the present disclosure belongs within the scope of the technical ideas described in the appended claims, and it is understood that such changes and modifications naturally belong to the technical scope of the present disclosure.

For example, in the above-mentioned embodiment, the examples in which the camera 10 and the camera 20 are sensors to be installed at construction sites for civil engineering construction work or the like have been described, but the present disclosure is not limited to such examples. For example, the camera 10 and the camera 20 may be lightweight and compact video cameras capable of being worn by a person on the body for hands-free photographing. In this case, image data captured by the video camera worn by the worker U may be used to perform image recognition and motion detection by the information processing apparatus 30.

Further, in the above-mentioned embodiment, the examples in which the camera 10, the camera 20, and the information processing apparatus 30 are separate apparatuses have been described, but the present disclosure is not limited to such examples. For example, the information processing apparatus 30 may be built in either one or each of the camera 10 and the camera 20. Alternatively, the camera 10, the camera 20, and the information processing apparatus 30 may be implemented on the same apparatus. In this case, the delay from the acquisition of image data by the camera 10 or the camera 20 to image recognition and motion detection from the image data can be reduced.

Further, in the above-mentioned embodiment, the examples in which the training data storage unit 330 and the learning data storage unit 340 are components within the information processing apparatus 30 have been described, but the present disclosure is not limited to such examples. For example, the training data storage unit 330 and the learning data storage unit 340 may be implemented as external storage apparatuses configured to be communicable with the information processing apparatus 30. Alternatively, the training data storage unit 330 and the learning data storage unit 340 may be implemented on a server configured to be communicable with the information processing apparatus 30, and may be implemented on the edge server 50 or the cloud server 60. In this case, the learning unit 352 and the image recognition unit 354 of the information processing apparatus 30 may update or refer to the training data storage unit 330 or the learning data storage unit 340 implemented on the edge server 50 or the cloud server 60 via the base station 6 and the network 7.

Further, in the above-mentioned embodiment, as an operation example in a case where an event-based camera is employed for the sensor 20, the examples in which a binocular RGB camera or a TOF camera is employed for the sensor 10 have been described. However, it is also possible for the information processing system according to the present embodiment to include only one sensor, namely, the camera 10 that is an event-based camera. In this case, the image recognition unit 354 performs image recognition using models created by learning from image data captured by the event-based camera as training data. In this configuration, when a sufficient number of samples of image data, which serves as training data, can be obtained, the acquisition of image data to be used for image recognition and motion detection can be performed simultaneously with a single event-based camera. Thus, in a case where it is desired to perform processing such as automatically controlling a construction machine or causing an alarm to go off using an object detection result output by the output control unit 359, a reduction in latency can be expected. Further, the processing load of motion detection on the information processing apparatus 30 side is reduced, and a reduction in power consumption of the information processing apparatus 30 can also be expected.

Further, the camera 10 and the camera 20 may include two different event-based cameras. In this case, the positions, orientations, and angles of view of the camera 10 and the camera 20 are desirably approximately similar enough to be regarded as the same in region correspondence detection by the object detection unit 358.

Moreover, in the above-mentioned embodiment, as the preferred embodiment of the information processing system according to the present disclosure, the examples in which the information processing system is utilized at construction sites for civil engineering construction work or the like have been described, but the present disclosure is not limited to such examples. For example, the information processing system according to the present disclosure may be applied to airports or aircraft maintenance yards. Alternatively, the information processing system according to the present disclosure may be applied to factories or the like in the manufacturing industry. Moreover, the information processing system according to the present disclosure may be applied to other scenes where it is desired to capture worker behavior by sensors such as cameras and detect workers from captured image data through image recognition, besides the examples described above. For example, at an airport or an aircraft maintenance yard where workers perform maintenance work near aircrafts, it is assumed that entire or parts of workers' bodies are hidden behind the aircrafts or the like on image data obtained by capturing the state of the airport or aircraft maintenance yard. However, when the workers wear equipment such as helmets or reflective vests, for example, the above-mentioned workers can be accurately detected from the above-mentioned image data using the information processing system according to the present disclosure.

Further, the steps of the processing of the operation of the camera 10, the camera 20, and the information processing apparatus 30 according to the present embodiment are not necessarily required to be performed chronologically in the order described as the explanatory diagrams. For example, the respective steps of the processing of the operation of the camera 10, the camera 20, and the information processing apparatus 30 may be performed in orders different from the orders described as the explanatory diagrams, or may be performed in parallel.

Further, it is also possible to create one or more computer programs for causing the hardware built in the information processing apparatus 900 described above, such as a CPU, a ROM, and a RAM, to exert the functions of the information processing system according to the present embodiment. Further, a computer-readable storage medium having stored therein the one or more computer programs is also provided.

Further, the effects described herein are merely explanatory or illustrative and not limiting. That is, the technology according to the present disclosure may achieve other effects that are apparent to those skilled in the art from the description of the present specification, together with the effects described above or instead of the effects described above.

Note that the present technology can also adopt the following configurations.
(1) An information processing apparatus including:
   an image recognition unit configured to recognize an object from image data;
   a motion detection unit configured to detect motion in sensing data acquired by a sensor; and
   an object detection unit configured to detect an object recognized as a predetermined object by the image recognition unit and corresponding to a region in which motion has been detected by the motion detection unit.
(2) The information processing apparatus according to (1) above, in which the motion detection unit identifies, in the sensing data, a region corresponding to the predetermined object recognized by the image recognition unit as a motion detection target region and detects motion in the motion detection target region.
(3) The information processing apparatus according to (1) above, in which the image recognition unit identifies, in the image data, an object recognition target region based on a result of motion detection by the motion detection unit and recognizes an object from the object recognition target region.
(4) The information processing apparatus according to (1) above, in which the image recognition unit executes processing of recognizing an object from the image data in parallel with executing motion detection processing in the sensing data by the motion detection unit.
(5) The information processing apparatus according to any one of (1) to (4) above, in which the image data and the sensing data include the same type of data obtained by the same camera.
(6) The information processing apparatus according to (5) above, in which the image data and the sensing data include infrared image data obtained by a TOF camera utilizing near-infrared light.
(7) The information processing apparatus according to (5) above, in which the image data and the sensing data include image data including color information obtained by a camera utilizing visible light or image data obtained by an event-based type of sensor configured to detect a luminance change in each pixel.
(8) The information processing apparatus according to any one of (1) to (4) above, in which the image data and the sensing data include different types of data obtained by different cameras.
(9) The information processing apparatus according to (8) above, in which
   the image data includes image data including color information obtained by a camera utilizing visible light, and
   the sensing data includes infrared image data obtained by a TOF camera utilizing near-infrared light.
(10) The information processing apparatus according to (8) above, in which
   the image data includes any one of image data including color information obtained by a camera utilizing visible light, infrared image data obtained by a TOF camera utilizing near-infrared light, or image data obtained by an event-based type of sensor configured to detect a luminance change in each pixel, and
   the sensing data includes any one of image data including color information obtained by a camera utilizing visible light, infrared image data obtained by a TOF camera utilizing near-infrared light, or image data obtained by an event-based type of sensor configured to detect a luminance change in each pixel.
(11) The information processing apparatus according to any one of (1) to (9) above, further including:
   an output unit configured to output an object detection result based on a result of detection by the object detection unit, the object detection result including at least one of information indicating whether the predetermined object has been detected or not, a position of the predetermined object, or information regarding a distance between the predetermined object and a predetermined reference point.
(12) An information processing apparatus including:
   an image recognition unit configured to recognize an object from image data; and
   an object detection unit configured to detect a plurality of objects recognized as predetermined objects of types different from each other by the image recognition unit.
(13) The information processing apparatus according to (12) above, further including:
   a motion detection unit configured to detect motion in sensing data acquired by a sensor, in which
   the object detection unit detects one or more objects corresponding to regions which have been recognized as predetermined objects of types different from each other by the image recognition unit and in which motion has been detected by the motion detection unit.
(14) The information processing apparatus according to any one of (1) to (13) above, in which
   the predetermined object includes an object to be held or worn by a person, and
   the image recognition unit learns, using machine learning, image data on the predetermined object, image data indicating the predetermined object being held or worn by the person, and image data indicating a person not holding and wearing the predetermined object, and recognizes an object from image data using a model created as a result of the learning.
(15) The information processing apparatus according to (13) above, in which the predetermined objects each include an object including a light-emitting portion or a member configured to recursively reflect light.
(16) A program for causing a computer to function as:
   an image recognition unit configured to recognize an object from image data;
   a motion detection unit configured to detect motion in sensing data acquired by a sensor; and
   an object detection unit configured to detect an object recognized as a predetermined object by the image recognition unit and corresponding to a region in which motion has been detected by the motion detection unit.

### [Reference Signs List]

5: Local area network
6: Base station
7: Network
10: Camera
20: Camera
30: Information processing apparatus
310: Acquisition unit
320: Control information storage unit
330: Training data storage unit
340: Learning data storage unit
350: Control unit
352: Learning unit
354: Image recognition unit
356: Motion detection unit
358: Object detection unit
359: Output control unit
360: Operation unit
40: Output apparatus
50: Edge server
60: Cloud server
O: Object
U: Worker

## Claims

1. An information processing apparatus comprising:
an image recognition unit configured to recognize an object from image data;
a motion detection unit configured to detect motion in sensing data acquired by a sensor; and
an object detection unit configured to detect an object recognized as a predetermined object by the image recognition unit and corresponding to a region in which motion has been detected by the motion detection unit.

2. The information processing apparatus according to claim 1,
wherein the motion detection unit identifies, in the sensing data, a region corresponding to the predetermined object recognized by the image recognition unit as a motion detection target region and detects motion in the motion detection target region.

3. The information processing apparatus according to claim 1,
wherein the image recognition unit identifies, in the image data, an object recognition target region based on a result of motion detection by the motion detection unit and recognizes an object from the object recognition target region.

4. The information processing apparatus according to claim 1,
wherein the image recognition unit executes processing of recognizing an object from the image data in parallel with executing motion detection processing in the sensing data by the motion detection unit.

5. The information processing apparatus according to claim 1, wherein the image data and the sensing data include a same type of data obtained by a same camera.

6. The information processing apparatus according to claim 5, wherein the image data and the sensing data include infrared image data obtained by a TOF camera utilizing near-infrared light.

7. The information processing apparatus according to claim 5, wherein the image data and the sensing data include image data including color information obtained by a camera utilizing visible light or image data obtained by an event-based type of sensor configured to detect a luminance change in each pixel.

8. The information processing apparatus according to claim 1,
wherein the image data and the sensing data include different types of data obtained by different cameras.

9. The information processing apparatus according to claim 8,
wherein
the image data includes image data including color information obtained by a camera utilizing visible light, and
the sensing data includes infrared image data obtained by a TOF camera utilizing near-infrared light.

10. The information processing apparatus according to claim 8,
wherein
the image data includes any one of image data including color information obtained by a camera utilizing visible light, infrared image data obtained by a TOF camera utilizing near-infrared light, or image data obtained by an event-based type of sensor configured to detect a luminance change in each pixel, and
the sensing data includes any one of image data including color information obtained by a camera utilizing visible light, infrared image data obtained by a TOF camera utilizing near-infrared light, or image data obtained by an event-based type of sensor configured to detect a luminance change in each pixel.

11. The information processing apparatus according to claim 1, further comprising:
an output unit configured to output an object detection result based on a result of detection by the object detection unit, the object detection result including at least one of information indicating whether the predetermined object has been detected or not, a position of the predetermined object, or information regarding a distance between the predetermined object and a predetermined reference point.

12. An information processing apparatus comprising:
an image recognition unit configured to recognize an object from image data; and
an object detection unit configured to detect a plurality of objects recognized as predetermined objects of types different from each other by the image recognition unit.

13. The information processing apparatus according to claim 12, further comprising:
a motion detection unit configured to detect motion in sensing data acquired by a sensor, wherein
the object detection unit detects one or more objects corresponding to regions which have been recognized as predetermined objects of types different from each other by the image recognition unit and in which motion has been detected by the motion detection unit.

14. The information processing apparatus according to claim 1,
wherein
the predetermined object includes an object to be held or worn by a person, and
the image recognition unit learns, using machine learning, image data on the predetermined object, image data indicating the predetermined object being held or worn by the person, and image data indicating a person not holding and wearing the predetermined object, and recognizes an object from image data using a model created as a result of the learning.

15. The information processing apparatus according to claim 13,
wherein the predetermined objects each include an object including a light-emitting portion or a member configured to recursively reflect light.

16. A program for causing a computer to function as:
an image recognition unit configured to recognize an object from image data;
a motion detection unit configured to detect motion in sensing data acquired by a sensor; and
an object detection unit configured to detect an object recognized as a predetermined object by the image recognition unit and corresponding to a region in which motion has been detected by the motion detection unit.
